# EUROPEAN PATENT APPLICATION

(11) **EP 4 797 259 A1**
(43) Date of publication of application: **26.08.2026**
(21) Application number: 24915539.1
(22) Date of filing: 28.11.2024
(51) Int. Cl.: G10L 25/87, G10L 17/02, G10L 17/06

(54) **ELECTRONIC DEVICE, METHOD, AND NON-TRANSITORY COMPUTER-READABLE STORAGE MEDIUM FOR DETERMINING UTTERANCE SECTION OF SPEAKER FROM AUDIO DATA**

(30) Priority: 02.01.2024 KR 20240000615
(71) Applicant: Samsung Electronics Co., Ltd., Suwon-si, Gyeonggi-do 16677 (KR)
(72) Inventor: PARK, Sungjae, Suwon-si Gyeonggi-do 16677 (KR); APSINGEKAR, Vijendra Raj, Mountain View, California 94043 (US); OH, Hyuk, Suwon-si Gyeonggi-do 16677 (KR); RYU, Seungbeom, Suwon-si Gyeonggi-do 16677 (KR); KI, Taeyeon, Mountain View, California 94043 (US)
(74) Representative: Gulde & Partner
(86) International application number: PCT/KR2024/019205
(87) International publication number: WO 2025/146956

(57) **Abstract**

An electronic device according to an embodiment of the present invention may obtain a plurality of frames by dividing audio data while obtaining the audio data using a microphone. The electronic device may obtain first vectors respectively corresponding to the plurality of frames. The electronic device may determine speakers respectively corresponding to the first vectors using groups which are obtained by grouping the first vectors and second vectors stored in a memory, and in which the first vectors are respectively included. The electronic device may store, in the memory, information indicating a speaker of at least one time section of the audio data, the information being determined using the speakers respectively corresponding to the first vectors. The electronic device may remove at least one of the first vectors and the second vectors from the memory on the basis of the total number of the first vectors and the second vectors in order to reduce the total number to at most a specified number.

## Description

### [TECHNICAL FIELD]

The disclosure relates to an electronic device, a method, and a non-transitory computer readable storage medium for determining a speech section of a speaker from audio data.

### [BACKGROUND ART]

A natural language (or an ordinary language) means a language used in the daily life of mankind. An electronic device that processes the natural language is being developed. For example, the electronic device may detect a user's speech from audio data including the speech, or may generate text representing the detected speech.

The above information is presented as background information only to assist with an understanding of the disclosure. No determination has been made, and no assertion is made, as to whether any of the above might be applicable as prior art with regard to the disclosure.

### [DISCLOSURE]

### [Technical Solution]

Aspects of the disclosure are to address at least the above-mentioned problems and/or disadvantages and to provide at least the advantages described below. Accordingly, an aspect of the disclosure is to provide an electronic device, a method, and a non-transitory computer readable storage medium for determining a speech section of a speaker from audio data.

Additional aspects will be set forth in part in the description which follows and, in part, will be apparent from the description, or may be learned by practice of the presented embodiments.

In accordance with an aspect of the disclosure, an electronic device is provided. The electronic device may include a microphone, at least one processor including processing circuitry, and memory including one or more storage media storing instructions. The instructions, when executed by the at least one processor individually or collectively, may cause the electronic device to, while obtaining audio data by using the microphone, obtain a plurality of frames by dividing the audio data. The instructions, when executed by the at least one processor individually or collectively, may cause the electronic device to obtain first vectors respectively corresponding to the plurality of frames. The instructions, when executed by the at least one processor individually or collectively, may cause the electronic device to determine a speaker corresponding to each of the first vectors by using groups in which the first vectors are respectively included, which are obtained by grouping the first vectors, and second vectors stored in the memory. The grouping of the first vectors, and the second vectors may be performed by the at least one processor. The instructions, when executed by the at least one processor individually or collectively, may cause the electronic device to store, within the memory, information which is determined by using a speaker respectively corresponding to the first vectors, the information indicating a speaker of at least one time section of the audio data. The instructions, when executed by the at least one processor individually or collectively, may cause the electronic device to, based on a total number of the first vectors and the second vectors lower than or equal to a preset number, store the first vectors in the memory. The instructions, when executed by the at least one processor individually or collectively, may cause the electronic device to, based on a total number of the first vectors and the second vectors greater than the preset number, delete at least one vector among the first vectors and the second vectors from the memory to adjust the total number to be lower than or equal to the preset number.

In accordance with another aspect of the disclosure, a method of an electronic device including a microphone is provided. The method may include, while obtaining audio data by using the microphone, obtaining a plurality of frames by dividing the audio data. The method may include obtaining first vectors respectively corresponding to the plurality of frames. The method may include determining a speaker corresponding to each of the first vectors by using groups in which the first vectors are respectively included, which are obtained by grouping the first vectors, and second vectors stored in memory of the electronic device. The grouping of the first vectors, and the second vectors may be performed by at least one processor of the electronic device. The method may include storing, within the memory, information that is determined by using a speaker respectively corresponding to the first vectors, the information indicating a speaker of at least one time section of the audio data. The method may include storing, based on a total number of the first vectors and the second vectors lower than or equal to a preset number, within the memory, the first vectors. The method may include, based on a total number of the first vectors and the second vectors greater than the preset number, deleting at least one vector among the first vectors and the second vectors from the memory to adjust the total number to be lower than or equal to the preset number.

According to an embodiment, an electronic device may include a microphone, at least one processor including processing circuitry, and memory including one or more storage mediums storing instructions. The instructions, when executed by the at least one processor individually or collectively, may cause the electronic device to obtain first vectors respectively corresponding to a plurality of frames that is included in a first time section of audio data obtained by controlling the microphone. The instructions, when executed by the at least one processor individually or collectively, may cause the electronic device to determine a speaker of each of the plurality of frames by performing clustering of the first vectors and second vectors obtained in a second time section of the audio data before the first time section. The instructions, when executed by the at least one processor individually or collectively, may cause the electronic device to determine, among the first vectors and the second vectors, at least one vector to be stored in the memory to identify at least one speaker associated with a third time section of the audio data after the first time section.

In an embodiment, a non-transitory computer readable storage medium storing instructions may be provided. The instructions, when executed by an electronic device including a microphone, may cause the electronic device to obtain first vectors respectively corresponding to a plurality of frames that is included in a first time section of audio data obtained by controlling the microphone. The instructions, when executed by the at least one processor individually or collectively, may cause the electronic device to determine a speaker of each of the plurality of frames by performing clustering of the first vectors and second vectors obtained in a second time section of the audio data before the first time section. The instructions, when executed by the at least one processor individually or collectively, may cause the electronic device to determine, among the first vectors and the second vectors, at least one vector to be stored in memory to identify at least one speaker associated with a third time section of the audio data after the first time section.

The one or more non-transitory computer-readable storage media storing one or more computer programs may be provided. The one or more programs may comprise computer-executable instructions that, when executed by one or more processors of an electronic device, individually or collectively, cause the electronic device to perform, while obtaining audio data by using a microphone of the electronic device, obtaining a plurality of frames by dividing the audio data, obtaining first vectors respectively corresponding to the plurality of frames. The one or more programs may comprise computer-executable instructions that, when executed by one or more processors of an electronic device, individually or collectively, cause the electronic device to perform determining a speaker corresponding to each of the first vectors by using groups in which the first vectors are respectively included, which are obtained by grouping the first vectors, and second vectors stored in memory of the electronic device, wherein the grouping of the first vectors, and the second vectors is performed by at least one processor of the electronic device. The one or more programs may comprise computer-executable instructions that, when executed by one or more processors of an electronic device, individually or collectively, cause the electronic device to perform storing, within the memory, information that is determined by using a speaker respectively corresponding to the first vectors, the information indicating a speaker of at least one time section of the audio data. The one or more programs may comprise computer-executable instructions that, when executed by one or more processors of an electronic device, individually or collectively, cause the electronic device to perform, based on a total number of the first vectors and the second vectors greater than a preset number, deleting at least one vector among the first vectors and the second vectors from the memory to adjust the total number to be lower than or equal to the preset number.

Other aspects, advantages, and salient features of the disclosure will become apparent to those skilled in the art from the following detailed description, which, taken in conjunction with the annexed drawings, discloses various embodiments of the disclosure.

### [DESCRIPTION OF THE DRAWINGS]

The above and other aspects, features, and advantages of certain embodiments of the disclosure will be more apparent from the following description taken in conjunction with the accompanying drawings, in which:
FIG. 1 illustrates an operation of an electronic device that recognizes one or more speakers from audio data according to an embodiment of the disclosure;
FIG. 2 illustrates a block diagram of an electronic device according to an embodiment of the disclosure;
FIG. 3 illustrates a flowchart of an electronic device according to an embodiment of the disclosure;
FIG. 4 illustrates an operation of an electronic device that detects at least one voice section from audio data according to an embodiment of the disclosure;
FIG. 5 illustrates an operation of an electronic device that divides a plurality of frames from audio data according to an embodiment of the disclosure;
FIG. 6 illustrates an operation of an electronic device that generates vectors respectively corresponding to a plurality of frames of audio data according to an embodiment of the disclosure;
FIG. 7 illustrates an operation of an electronic device that calculates similarities between vectors associated with audio data according to an embodiment of the disclosure;
FIG. 8 illustrates an operation of an electronic device that performs clustering of vectors associated with audio data according to an embodiment of the disclosure;
FIGS. 9A, 9B, 9C, and 9D illustrate an operation of an electronic device for filtering vectors associated with audio data according to various embodiments of the disclosure;
FIG. 10 illustrates a flowchart of an electronic device according to an embodiment of the disclosure;
FIGS. 11A and 11B illustrate a user interface (UI) displayed by an electronic device according to various embodiments of the disclosure; and
FIG. 12 is a block diagram of an electronic device in a network environment according to an embodiment of the disclosure.

Throughout the drawings, it should be noted that like reference numbers are used to depict the same or similar elements, features, and structures.

### [MODE FOR INVENTION]

The following description with reference to the accompanying drawings is provided to assist in s comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

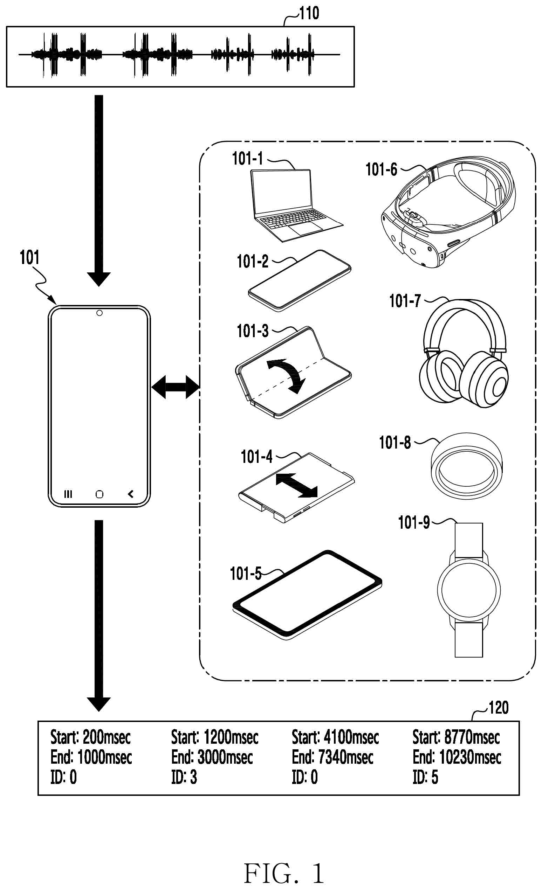

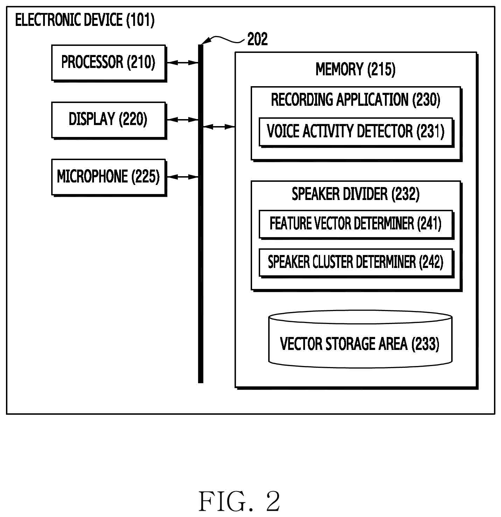

FIG. 1 illustrates an operation of an electronic device 101 that recognizes one or more speakers from audio data 110 according to an embodiment of the disclosure. Referring to FIG. 1, the electronic device 101 having the shape of a mobile phone is illustrated. The electronic device 101 may have various types of a form factor, such as a laptop personal computer (PC) 101-1, smartphones (e.g., a bar-type smartphone 101-2, a foldable type smartphone 101-3, or a sliding (or rollable) type smartphone 101-4), a tablet PC 101-5, a head-mounted display (HMD) device 101-6, a headset 101-7 (or a headphone), a ring 101-8, a watch101-9, and other similar computing devices (not illustrated). The electronic device 101 may be referred to as a mobile device, a user equipment (UE), a multifunctional device, a portable communication device, and/or a portable device. The form factor of the electronic device 101 is not limited to the form factors illustrated in FIG. 1. For example, the electronic device 101 may be included as an electronic control unit (ECU) within a vehicle (e.g., an electric vehicle (EV)). For example, the electronic device 101 may have a form factor that is wearable by a user, such as the headset 101-7, the ring 101-8, and/or the watch 101-9 with the appearance of a watch, or may have a form factor that is implantable in a user's body part. The embodiment is not limited thereto, and the electronic device 101 may have the form factor of an earbud and/or an earphone. An example of a hardware configuration included in the electronic device 101 will be described with reference to FIG. 2.

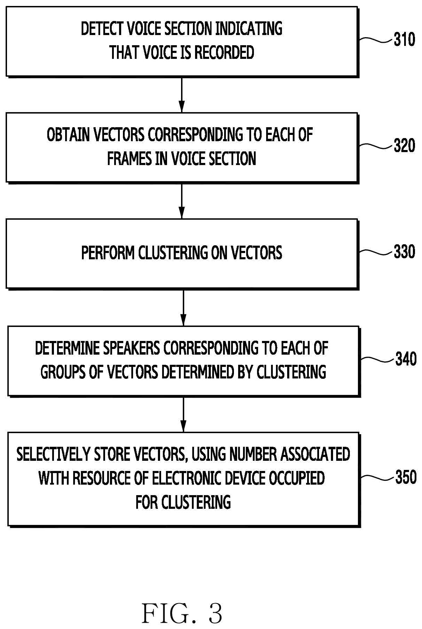

The electronic device 101 according to an embodiment may perform speaker diarization (or speaker diarisation). By performing the speaker diarization, the electronic device 101 may detect or identify one or more speakers associated with the audio data 110. By performing the speaker diarization, the electronic device 101 may detect or determine at least one time section corresponding to a specific speaker within an entire time section of the audio data 110. By performing the speaker diarization, the electronic device 101 may detect or determine a plurality of time sections corresponding to each of the plurality of speakers within the entire time section of the audio data 110. For example, the electronic device 101 may allocate or match the entire time section of the audio data 110 to each of the plurality of speakers. For example, the electronic device 101 which identified that a speech of the specific speaker is included in a part of the audio data 110 corresponding to a specific time section may determine the specific time section and/or match the specific speaker to the specific time section. To perform the speaker diarization, the electronic device 101 may recognize one or more speakers from the audio data 110 (e.g., speaker recognition). An operation of the electronic device 101 performing the speaker diarization will be described with reference to FIG. 3.

Referring to FIG. 1, a part of information 120 generated by the electronic device 101 that performed the speaker diarization associated with the audio data 110 is illustrated. The information 120 may include an identity (ID) (e.g., 0) indicating a speaker of a recorded speech in the specific time section of the audio data 110. Referring to FIG. 1, the information 120 may indicate that the speech of the speaker having an identity of 0 is recorded in a first time section from a time point of 200 msec to a time point of 1000 msec. The information 120 may indicate that the speech of the speaker having an identity of 3 is recorded in a second time section from a time point of 1200 msec to a time point of 3000 msec. The information 120 may indicate that the speech of the speaker having an identity of 0 is recorded in a third time section from a time point of 4100 msec to a time point of 7340 msec. The information 120 may indicate that the speech of the speaker having an identity of 5 is recorded in a fourth time section from a time point of 8770 msec to a time point of 10230 msec.

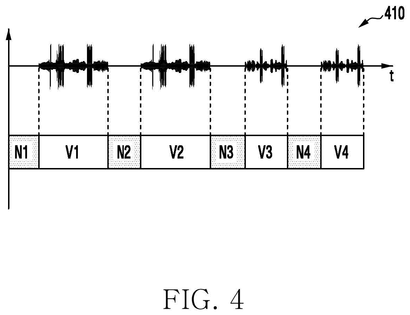

According to an embodiment, by using the information indicating a feature of a sound recorded in a part (e.g., a frame having a preset length in a time domain) of the time section of the audio data 110, the electronic device 101 may determine the speaker who uttered the sound recorded in the part. The information may be referred to as feature information, a feature vector, an embedding vector, and/or an acoustic feature. The electronic device 101 that divided a plurality of frames from the audio data 110 may determine the speaker associated with each of the plurality of frames by comparing vectors corresponding to each of the plurality of frames. By grouping the plurality of frames adjacent to each other in a time domain and associated with a specific speaker, the electronic device 101 may obtain or determine a speech section of the specific speaker. The speech section may mean a time section in which it is determined that the speech of a specific speaker is recorded. An operation of the electronic device 101 that performs the speaker diarization using the information corresponding to each of the frames divided from the audio data 110 will be described with reference to FIGS. 4 to 7.

The number of vectors obtained by the electronic device 101 from the audio data 110 may be associated with a length of the audio data 110 because the vectors correspond to each of the plurality of frames of the audio data 110. For example, the number of the vectors may be generally proportional to the length of the audio data 110. The electronic device 101 may calculate similarities of the vectors and match the vectors to one or more speakers, or may group the vectors into groups corresponding to each of the speakers. In case that the electronic device 101 determines the similarities of two vectors, the electronic device 101 may determine similarities for vectors. For example, since the number of similarities is proportional to the square of *a* ( $C 2 a = \frac{a \times \left(a-1\right)}{2}$ ), as the number of vectors increases, the amount of calculation performed for the grouping and/or the use of memory for storing the similarities may increase exponentially. In case that the length of the audio data 110 is increased, since the number of the vectors increases, the number of similarities may increase as the length of the audio data 110 increases.

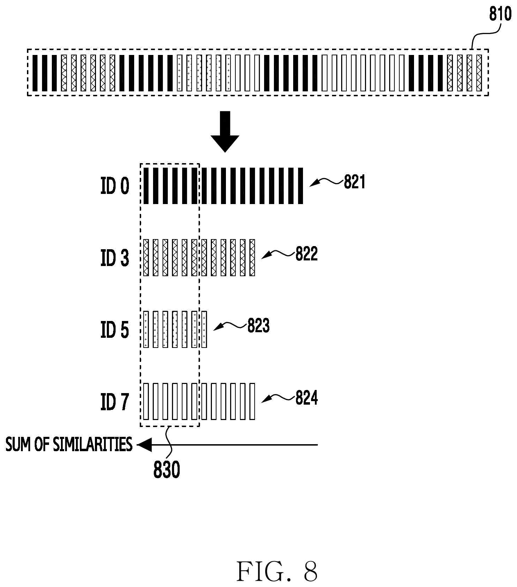

Since the number of similarities increases according to the length of the audio data 110, the amount of the calculation (or a resource of the electronic device 101 occupied to calculate the similarities) required to calculate the similarities may increase according to the length of the audio data 110. According to an embodiment, the electronic device 101 may periodically (or repeatedly) delete or discard vectors used to calculate the similarities, in order to reduce or maintain time and/or the resource (e.g., the amount of the calculation) required to calculate the similarities. For example, the electronic device 101 may manage or compress the number of vectors and reduce the amount of the calculation required to perform the speaker diarization, or improve performance of the speaker diarization. An operation of the electronic device 101 of managing (e.g., storing, and/or removing) vectors obtained from the audio data 110 will be described with reference to FIGS. 8, 9A to 9D, and/or 10.

In an embodiment, the time section, obtained from the audio data 110 by performing speaker diarization, and corresponding to any one of the plurality of speakers, may be used to execute a function associated with the audio data 110. For example, using the information 120, the electronic device 101 may extract or determine a part of the audio data 110 to be used to perform a speech-to-text (STT). For example, the electronic device 101 may generate or obtain text indicating the speech (e.g., one or more natural language sentences) of the specific speaker in the speech section by performing STT for the speech section of the specific speaker, obtained by performing the speaker diarization. The text may be stored in conjunction with the speech section within the information 120.

As described above, the electronic device 101 according to an embodiment may analyze (e.g., an on-device analysis) the audio data 110 independently of an external electronic device such as a server. Analysis of the audio data 110 performed alone by the electronic device 101 may include the speaker diarization. The electronic device 101 with more limited resource than the server may periodically (or repeatedly) remove information (e.g., the vectors corresponding to divided frames from the audio data 110) necessary for the speaker diarization in order to reduce or maintain the amount of calculation required to perform the speaker diarization despite an increase in the length of the audio data 110. For example, the electronic device 101 may perform the speaker diarization of the audio data 110 that is relatively long (e.g., with a length greater than 10 hours) at high speed in a relatively short time.

Hereinafter, a hardware configuration of the electronic device 101 of FIG. 1 will be described with reference to FIG. 2.

FIG. 2 illustrates a block diagram of an electronic device 101 according to an embodiment of the disclosure.

According to an embodiment, the electronic device 101 may include at least one of a processor 210, memory 215, a display 220, or a microphone 225. The processor 210, the memory 215, the display 220, the microphone 225 may be electronically and/or operably coupled with each other by an electronical component such as a communication bus 202. Hereinafter, an operable coupling of the electronical components may mean that a direct connection or an indirect connection between the electronical components is established by wire or wirelessly so that a second electronical component is controlled by a first electronical component among the electronical components. Although illustrated based on different blocks, an embodiment is not limited thereto, and a part (e.g., at least a part of the processor 210 and the memory 215) of the electronical components of FIG. 2 may be included in a single integrated circuit such as a system on a chip (SoC). The type and/or the number of the electronical component included in the electronic device 101 are not limited to those illustrated in FIG. 2. For example, the electronic device 101 may include only a part of the electronical components illustrated in FIG. 2.

According to an embodiment, the processor 210 of the electronic device 101 may include circuitry (e.g., processing circuitry) for processing data based on one or more instructions. For example, the circuitry for processing data may include an arithmetic and logic unit (ALU), a floating point unit (FPU), a field programmable gate array (FPGA), a central processing unit (CPU), a graphic processing unit (GPU), a neural processing unit (NPU) and/or an application processor (AP). For example, the number of the processor 210 may be one or more. A processing circuitry of a processor that loads (or fetches) an instruction and performs calculation corresponding to the loaded instruction may be called or referred to as core circuitry (or core). For example, the processor may have a structure of a multi-core processor that includes a plurality of core circuits, such as a dual core, a quad core, a hexa core, or an octa core. In an embodiment having the structure of the multi-core processor, core circuitry included in the processor 210 may be classified into big core circuitry (or performance core circuitry) that process the instructions relatively quickly, and little core circuitry (or efficiency core circuitry) that process the instructions relatively slowly, according to speed (e.g., clock frequency), power consumption, and/or cache memory. A function and/or operation described with reference to the disclosure may be performed individually or collectively by one or more processing circuitry included in the processor 210.

According to an embodiment, the memory 215 of the electronic device 101 may include the circuitry for storing data and/or the instruction inputted to and/or outputted from the processor 210. For example, the memory 215 may include volatile memory such as random-access memory (RAM) and/or non-volatile memory such as read-only memory (ROM). The non-volatile memory may be referred to as storage. For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, hard disk, compact disk, solid state drive (SSD), and embedded multimedia card (eMMC). The processor 210 of the electronic device 101 may execute the instructions of the memory 215 in the electronic device 101 and perform the function and/or the operation indicated by the instructions. For example, in case that the electronic device 101 includes at least one processor, the at least one processor may be configured to execute the instructions collectively or individually.

Referring to FIG. 2, the electronic device 101 may further include the display 220. An embodiment is not limited thereto, and the display 220 may be omitted according to a form factor of the electronic device 101. The display 220 of the electronic device 101 may output visualized information to a user. For example, the display 220 may output the visualized information to the user by being controlled by a controller such as the graphic processing unit (GPU), and/or the processor 210. The display 220 may include a liquid crystal display (LCD), a plasma display panel (PDP), and/or one or more light emitting diodes (LEDs). The LED may include an organic LED (OLED). The display 220 may include a flat panel display (FPD), and/or electronic paper. An embodiment is not limited thereto, and the display 220 may have at least a partially curved shape or a deformable shape. The display 220 having the deformable shape may be referred to as a flexible display.

In an embodiment, the electronic device 101 may include a sensor (e.g., a touch sensor panel (TSP)) for detecting an external object (e.g., a finger of the user) on the display 220. For example, using the TSP, the electronic device 101 may detect an external object that is in contact with the display 220 or is floating on the display 220. In response to detecting the external object, the electronic device 101 may execute the function associated with a specific visual object corresponding to a position on the display 220 of the external object among the visual objects displayed on the display 220.

In an embodiment, the electronic device 101 may include the microphone 225 that outputs an electric signal indicating vibration of atmosphere. For example, the electronic device 101 may output audio data (e.g., the audio data 110 of FIG. 1) (or an audio signal) including a speech of the user, using the microphone 225. The speech of the user included in the audio signal may be converted into information of a recognizable format by the processor 210 of the electronic device 101, based on a voice recognition model and/or a natural language understanding model. For example, the electronic device 101 may execute one or more functions among a plurality of functions that may be provided by the electronic device 101 by recognizing the speech of the user.

Although not illustrated, the electronic device 101 according to an embodiment may include an output means for outputting the information in a different shape other than a visualized shape. For example, the electronic device 101 may include a speaker for outputting an acoustic signal. For example, the electronic device 101 may include a motor for providing haptic feedback based on the vibration.

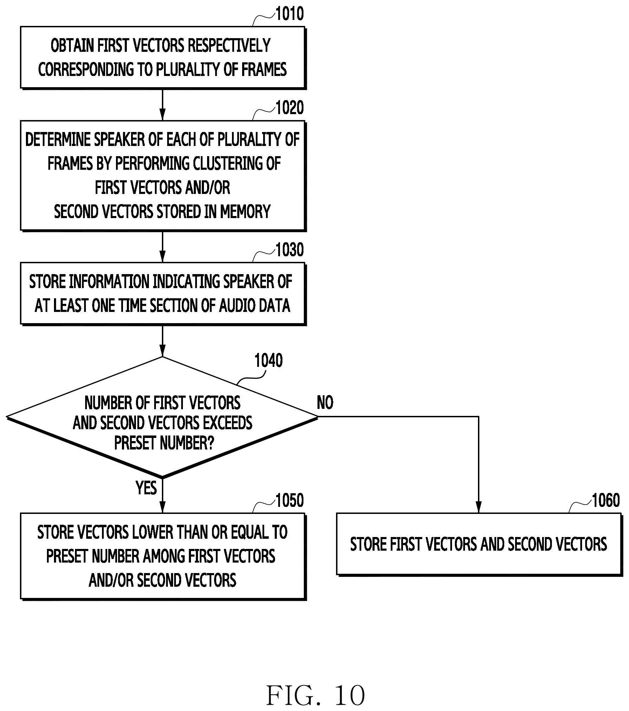

In an embodiment, in the memory 215 of the electronic device 101, one or more instructions (or commands) indicating the calculation and/or the operation to be performed by the processor 210 on the data may be stored. A set of one or more instructions may be referred to as firmware, an operating system, a process, a routine, a sub-routine, a program, and/or a software application (hereinafter, an application). For example, when the set of the plurality of instructions distributed in the shape of the operating system, the firmware, driver, and/or the application are executed, the electronic device and/or the processor may perform at least one of the operations of FIG. 3, and/or FIG. 10. Hereinafter, installation of the application in the electronic device may mean that one or more instructions provided in the shape of the application are stored in the memory of the electronic device, and the one or more applications are stored in a format (e.g., a file with an extension preset by the operating system of the electronic device) that is individually or collectively executable by at least one processor (e.g., the processor 210) of the electronic device.

Referring to FIG. 2, a recording application 230 may be installed in the memory 215 of the electronic device 101. Instructions included in the recording application 230 may include the sub-routine such as a voice activity detector 231 and/or a speaker divider 232, classified according to the function performed by the instructions. The processor 210 may perform the speaker diarization of audio data (e.g., the audio data 110 of FIG. 1) obtained from the microphone 225 and/or stored in the memory 215 by executing the recording application 230.

In order to perform the speaker diarization of the audio data, the processor 210 may execute the voice activity detector 231 using the audio data. By executing the voice activity detector 231, the processor 210 may detect or determine a time section (e.g., a voice interval, and/or a voice section) in which a voice generated by a person exists. The operation of the processor 210 executing the voice activity detector 231 is described with reference to FIG. 4. By using at least one voice section obtained from the audio data by executing the voice activity detector 231, the processor 210 may execute the speaker divider 232.

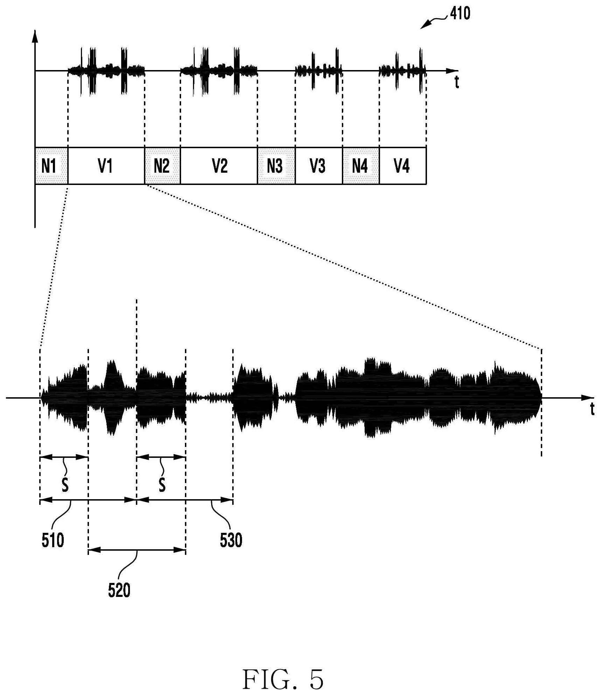

By executing the speaker divider 232, the processor 210 may perform the speaker diarization in at least a part (e.g., at least one voice section) of the audio data. The processor 210 may obtain the plurality of frames by dividing the voice section. An operation in which the processor 210 obtains the plurality of frames will be described with reference to FIG. 5. All of the plurality of frames may have a preset length, and may be at least partially overlapped to each other in a time domain. The processor 210 may execute a feature vector determiner 241 using the plurality of frames.

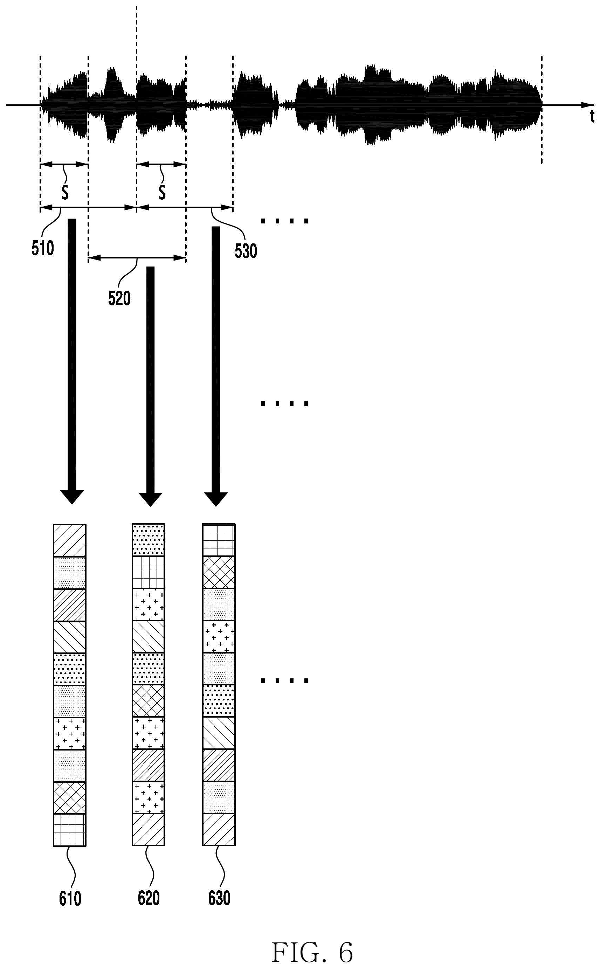

The processor 210 that has executed the feature vector determiner 241 may generate or determine the information corresponding to each of the plurality of frames. The information may include a vector including the plurality of numerical values indicating an acoustic feature of the frame as elements. The information generated based on execution of the feature vector determiner 241 may be generated to identify the speaker (e.g., text independent speaker verification (TISV)). The vector obtained by executing the feature vector determiner 241 is the information generated for the speaker diarization, and may include implicit information for specifying the speaker recorded (or captured) in the frame. An operation of the processor 210 executing the feature vector determiner 241 will be described with reference to FIG. 6. The processor 210 may execute a speaker cluster determiner 242, using the information corresponding to each of the frames.

The processor 210 that has executed the speaker cluster determiner 242 may perform clustering on the frames, using the information (e.g., vectors) corresponding to each of the frames. For example, the processor 210 may determine a relationship between one or more speakers and the vectors by clustering vectors of frames. Using the determined relationship, the processor 210 may match at least a part (e.g., the part corresponding to a group of frames) of the audio data and one or more speakers, and generate the information on a time point (or time) in the audio data spoken by the speaker. For example, each of one or more groups of vectors, generated by the clustering, may correspond to one or more speakers. The processor 210 may obtain or generate information (e.g., the information 120 of FIG. 1) indicating a result of performing speaker diarization from the audio data using the one or more groups.

In an embodiment, the clustering using the speaker cluster determiner 242 may be performed in case that the number of the feature vectors to be clustered is greater than or equal to a preset number. While receiving the audio data in real time, the processor 210 may accumulate and store the feature vector in the memory 215. When the number of feature vectors stored in the memory 215 is greater than or equal to the preset number, the processor 210 may determine to perform clustering on at least some of the feature vectors. In an embodiment, an operation of determining whether to perform clustering by comparing the number of feature vectors to the preset number may be performed in a unit of the voice section detected by the voice activity detector 231.

In an embodiment, the processor 210 that has executed the speaker cluster determiner 242 may store the information indicating a result of performing the speaker diarization in the memory 215. The processor 210 may store the vectors used to perform the speaker diarization in a vector storage area 233. The vector storage area 233 may be formed in at least a part of the memory 215 (e.g., volatile memory, and/or non-volatile memory) by the processor 210 executing the recording application 230 (or the speaker divider 232). For example, the vector storage area 233 may be formed or maintained in the volatile memory while the processor 210 executes the recording application 230, and perform the speaker diarization.

As described above with reference to FIG. 1, as the length of the audio data increases, the number of vectors generated from the audio data may increase. While performing the speaker diarization of the audio data, a size of the vector storage area 233 may be gradually increased to store the vectors. In an embodiment, the processor 210 may maintain the number of vectors stored in the vector storage area 233 to be lower than or equal to the preset number (or a threshold number).

For example, the processor 210 may select or extract one or more representative vectors associated with one or more speakers, recognized to perform the speaker diarization. The processor 210 may store only the one or more representative vectors among vectors obtained from the audio data in the vector storage area 233. While gradually performing the speaker diarization from the time point of the audio data, the processor 210 may filter other vectors different from the representative vectors among the vectors accumulated in the vector storage area 233, and maintain the number of vectors stored in the vector storage area 233 lower than or equal to the threshold number.

Since the number of vectors stored in the vector storage area 233 is maintained lower than or equal to the threshold number, the amount of calculation for calculating the similarities of the vectors may be kept constant in each time section (e.g., the voice section) from a starting point to an end point of the audio data. For example, the electronic device 101 having a limited resource may more quickly complete the speaker diarization on the audio data.

Hereinafter, an operation of the processor 210 for the speaker diarization, which is described with reference to FIG. 2, will be described with reference to FIG. 3.

FIG. 3 illustrates a flowchart of an electronic device according to an embodiment of the disclosure. An electronic device 101 of FIGS. 1 and 2 and/or a processor 210 of FIG. 2 may perform operations of the electronic device described with reference to FIG. 3. The order in which the operations of FIG. 3 are performed is not limited to the order illustrated in FIG. 3, and may be performed substantially simultaneously, or may be performed in the order different from the order illustrated in FIG. 3.

Referring to FIG. 3, within an operation 310, the processor of the electronic device according to an embodiment may detect a voice section indicating that voice is recorded. The processor that detects audio data received through a microphone (e.g., the microphone 225 of FIG. 2) of the electronic device and/or stored in memory (e.g., the memory 215 of FIG. 2) may perform the operation 310. While receiving the audio data through the microphone (e.g., while recording using the microphone is being performed), the processor may perform the operation 310, and detect a voice activity indicated by the audio data. The operation 310 may be performed by the processor that has executed a voice activity detector 231 of FIG. 2. By performing the operation 310, the processor may detect one or more voice sections in an entire time section (e.g., a time section between the time point when audio data is received through the microphone and a current time point) of the audio data.

While receiving the audio data, the processor may repeatedly perform operations of FIG. 3. For example, from a part of the audio data received between the last time point when the voice section was detected by performing the operation 310 and the current time point, the processor may newly detect the voice section. For the newly detected voice section, the processor may further perform the operations after the operation 310.

Referring to FIG. 3, within an operation 320, the processor of the electronic device according to an embodiment may obtain vectors corresponding to each of the frames in the voice section of the operation 310. The processor may perform the operation 320 by executing a speaker divider 232 (or a feature vector determiner 241) of FIG. 2. The frames of the operation 320 may be generated or determined by dividing the voice section of the operation 310. The processor may perform the operation 320, and obtain the vectors that are matched one-to-one to the frames. The vector may be a data structure including a one-dimensional array having a preset number of elements. By performing a TISV algorithm, the processor may obtain or generate the vectors of the operation 320.

In an embodiment in which the processor obtains the vectors included in the voice section of the audio data obtained by controlling a microphone, the processor may obtain the vectors of the operation 320 while obtaining the audio data, using the microphone. Since the operation 320 is performed based on detecting the voice section of the operation 310, in case that the audio data includes a plurality of the voice sections, the processor may repeatedly obtain vectors of the operation 320 when each of the plurality of voice sections is detected.

Referring to FIG. 3, within an operation 330, the processor of the electronic device according to an embodiment may perform clustering on vectors of the operation 320. The operation 330 may be performed by executing the speaker divider 232 (e.g., the speaker cluster determiner 242) of FIG. 2. The processor may perform clustering of the operation 330 according to the number of the vectors obtained by performing the operation 320 (e.g., when the number exceeds the preset number). In case of obtaining the audio data in real time, the processor may perform the operation 330 when detecting the voice section of the operation 310 from the audio data obtained in real time.

When performing clustering on a first voice section, the processor may perform clustering on first vectors obtained in the first voice section and second vectors obtained in at least one second voice section before the first voice section. The clustering in the second voice section may be completed before the clustering on the first voice section is performed. At least one of the second vectors may be stored in the memory (e.g., the memory 215 and/or the vector storage area 233 of FIG. 2) of the electronic device when the clustering is performed on the first voice section. By performing the clustering of the first vectors and the second vectors, the processor may determine a speaker of each of the frames included in the first voice section.

Referring to FIG. 3, within an operation 340, the processor of the electronic device according to an embodiment may determine the speakers corresponding to each of the groups of the vectors determined by the clustering. The processor may assign an identity (e.g., ID, and/or an index value) uniquely assigned to the speaker to each of the groups of the operation 340. When performing the operation 340 for the first voice section, the processor may load identities of one or more speakers detected by performing the speaker diarization for at least one second voice section before the first voice section. The loaded identities may be used to determine the speaker corresponding to each of the frames of the first voice section. Since the vectors of the operation 340 correspond to each of the frames included in the voice section detected by the operation 310, the processor performing the operation 340 may determine the speakers of each of the frames.

In an embodiment, the processor may assign the identities of the speaker to the voice section. In case that the frames included in one voice section correspond to different speakers, the processor may determine the speaker corresponding to the largest number of frames as a representative speaker of the voice section. The processor may assign the identity of the determined representative speaker to the voice section.

The result of determining the speakers of the operation 340 may be stored in the memory of the electronic device. For example, the processor may store information (e.g., the information 120 of FIG. 1) indicating the speaker of at least one time section (e.g., the time section corresponding to a group of vectors grouped by the clustering) of the audio data in the memory. When performing the operation 340 on the first voice section, the processor may combine or merge the information that determines one or more speakers associated with the first voice section with the information indicating one or more speakers associated with the at least one second voice section before the first voice section.

Referring to FIG. 3, within an operation 350, the processor of the electronic device according to an embodiment may selectively store the vectors, using the number associated with the resource of the electronic device occupied for the clustering. The vectors selected based on the operation 350 may be used or stored for the clustering of the vectors additionally performed after the clustering of the operation 330. Within the operation 350, the processor of the electronic device, according to an embodiment, may selectively store the vectors for the clustering. When the operation 350 is performed on the first voice section, the processor may perform filtering on the first vectors obtained from the first voice section and the second vectors associated with at least one second voice section before the first voice section. For example, among the first vectors and the second vectors, the processor may extract or select the representative vectors that will be used for the speaker diarization in a third voice section after the first voice section. When performing the speaker diarization in the third voice section, the selected representative vectors may be clustered together with third vectors obtained from the third voice section.

For example, while obtaining the audio data, the processor may compare the preset number to the number of the first vectors and the second vectors to maintain the number of vectors associated with the audio data and stored in the memory. Based on the number of the first vectors and the number of the second vectors lower than or equal to the preset number, the processor may store the first vectors in the memory. Based on the number of the first vectors and the second vectors greater than the preset number, the processor may store the preset number of the vectors among the first vectors and the second vectors in the memory.

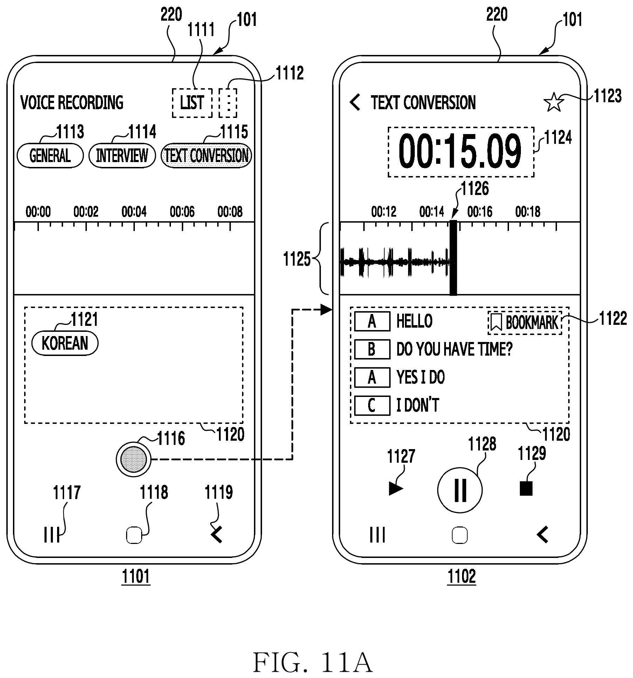

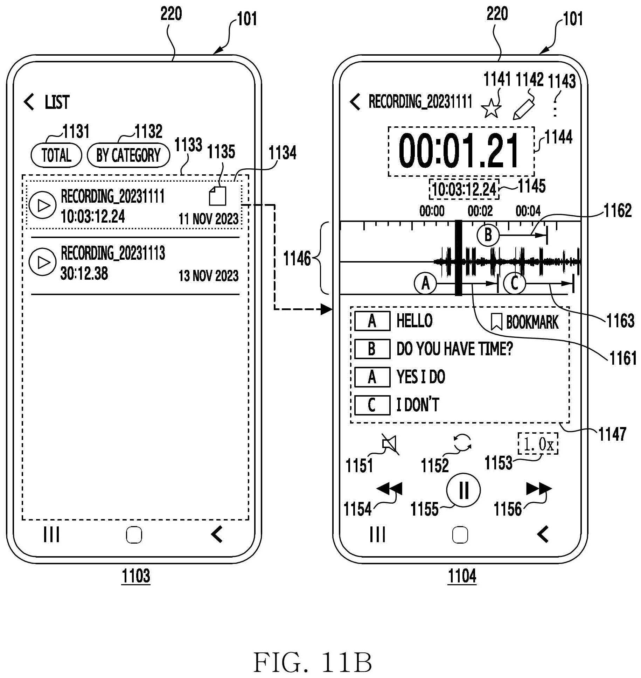

As described above, the operations of FIG. 3 may be repeatedly performed while receiving the audio data using the microphone. In response to an input indicating an interruption of an obtainment of the audio data, the processor may stop repeatedly performing the operations of FIG. 3 (e.g., the interruption of the speaker diarization, and/or completion). The processor that has stopped the speaker diarization may store, or output the result of determining one or more speakers and time sections (e.g., speech sections) corresponding to each of the one or more speakers from the audio data. For example, the processor may display a screen associated with the information indicating the result on the display (e.g., the display 220 of FIG. 2). An example of the screen is described with reference to FIGS. 11A and/or 11B.

Hereinafter, each of the operations of FIG. 3 will be exemplarily described with reference to FIGS. 4 to 8.

FIG. 4 illustrates an operation of an electronic device that detects at least one voice section from audio data 410 according to an embodiment of the disclosure. The electronic device 101 of FIGS. 1 and 2 and/or the processor 210 of FIG. 2 may perform an operation of the electronic device described with reference to FIG. 4. The operation of the electronic device described with reference to FIG. 4 may be associated with at least one (e.g., the operation 310) of the operations of FIG. 3.

Referring to FIG. 4, the electronic device that has received the audio data 410 (e.g., received from the microphone 225 of FIG. 2) may detect voice sections V1, V2, V3, and V4 indicating that voice is recorded from the audio data 410. Referring to FIG. 4, an entire time section of the audio data 410 may be classified into the voice sections V1, V2, V3, and V4 and sections N1, N2, N3, and N4 indicating that voice is not recorded. The classification may be performed by the electronic device that has executed the voice activity detector 231 of FIG. 2. Each of the sections N1, N2, N3, and N4 may be referred to as a non-voice section and/or a noise section.

The electronic device that has detected the voice sections V1, V2, V3, and V4 from the entire time section of the audio data 410 may obtain or generate information indicating starting points (e.g., a starting point detection (SPD)) and end points (e.g., an end point detection (EPD)) of the voice sections V1, V2, V3, and V4. For example, using a timestamp starting from the starting point of the audio data 410, the electronic device may obtain or determine timestamps corresponding to each of the starting points and the end points of the voice sections V1, V2, V3, and V4.

In order to detect the voice sections V1, V2, V3, and V4, the electronic device may perform a voice activity detection (VAD) (or a speech activity detection and/or a speech detection) algorithm. The VAD algorithm may include a calculation model for extracting a noise reduction and/or feature information (e.g., information associated with a waveform of the audio data 410 such as a spectrogram) of the audio data 410. By performing the calculations indicated by the VAD algorithm, the electronic device may check the starting points and the end points of the voice sections V1, V2, V3, and V4.

The electronic device that has detected at least one of the voice sections V1, V2, V3, and V4 may obtain the frames by dividing the at least one detected voice section. For example, at each of the time points where each of the voice sections V1, V2, V3, and V4 is detected, the electronic device may perform the operation 320 of FIG. 3 on the detected voice section. Hereinafter, an operation of the electronic device for dividing the plurality of the frames from a specific voice section will be described with reference to FIG. 5.

FIG. 5 illustrates an operation of an electronic device that divides a plurality of frames 510, 520, and 530 from audio data 410 according to an embodiment of the disclosure. The electronic device 101 of FIGS. 1 and 2 and/or the processor 210 of FIG. 2 may perform an operation of the electronic device described with reference to FIG. 5. The operation of the electronic device described with reference to FIG. 5 may be associated with at least one (e.g., the operation 320) of the operations of FIG. 3.

Referring to FIG. 5, an operation of the electronic device for dividing a voice section V1 of the audio data 410 into a plurality of frames is illustrated. An embodiment is not limited thereto, and the electronic device may divide the frames of the other voice sections V2, V3, and V4. An operation in which the electronic device divides the frames may be referred to as a segment.

Within the voice section V1, the electronic device may divide the frames 510, 520, and 530 having a preset size (or a window size) (e.g., 1.5 seconds). For example, a frame 510 may correspond to a time section having a length of 1.5 seconds from a starting point of the voice section V1. Other frames 520 and 530 in the voice section V1 different from the frame 510 may also have the length of 1.5 seconds. The preset size of the frames 510, 520, and 530 is not limited to the exemplified 1.5 seconds.

The electronic device may divide the frames 510, 520, and 530 spaced apart from a preset interval (or step size, and/or offset) from the voice section V1. For example, the starting point of the frame 510 and the starting point of the frame 520 after the frame 510 may have a difference of S = 0.75 seconds. Similarly, the difference between the starting point of the frame 520 and the starting point of the frame 530 after the frame 520 may also be S = 0.75 seconds. Referring to FIG. 5, since the length of each of the frames 510, 520, and 530 is longer than the interval S between the frames 510, 520, and 530, the frames 510, 520, and 530 may be at least partially overlapped to each other in a time domain.

Referring to FIG. 5, three frames 510, 520, and 530 divided from the voice section V1 are exemplarily illustrated. The number of frames divided from the voice section V1 may vary according to the length of the voice section V1. For example, the electronic device may obtain or generate 15 frames by dividing the voice section V1 with the length of 12 seconds into the frames with a size of 1.5 seconds and an interval of 0.75 seconds.

The electronic device that divides the plurality of the frames (e.g., the frames 510, 520, and 530) from the voice section V1 may obtain or generate feature information (e.g., vector) of each of the plurality of the frames. Hereinafter, an operation of the electronic device for generating vectors from the plurality of frames will be described with reference to FIG. 6.

FIG. 6 illustrates an operation of an electronic device that generates vectors 610, 620, and 630 respectively corresponding to a plurality of frames 510, 520, and 530 of audio data according to an embodiment of the disclosure. The electronic device 101 of FIGS. 1 and 2 and/or the processor 210 of FIG. 2 may perform the operation of the electronic device described with reference to FIG. 6. The operation of the electronic device described with reference to FIG. 6 may be associated with at least one (e.g., the operation 320) of the operations of FIG. 3.

Referring to FIG. 6, a state of the electronic device obtaining vectors 610, 620, and 630 from the plurality of frames (e.g., the frames 510, 520, and 530) divided from the voice section V1 of FIGS. 4 and 5 is illustrated. An embodiment is not limited thereto, and the electronic device may generate or determine the vectors from one or more voice sections detected from the audio data (e.g., the audio data 110 of FIG. 1 and/or the audio data 410 of FIGS. 4 and 5) and the plurality of frames divided from the one or more voice sections.

According to an embodiment, the electronic device may execute a TISV model using each of the frames 510, 520, and 530. The TISV model may be a calculation model trained to generate feature information such as a vector from a frame. For example, the TISV model may include an artificial neural network. The artificial neural network is a calculation model for simulating a neural activity (e.g., inference, recognition, and/or classification) of living things including humans, and may include instructions for performing the plurality of calculations indicated by the calculation model and resources used in the plurality of calculations. The resource may include a plurality of coefficients (e.g., weight and/or a filter matrix) used for execution of the artificial neural network. In an embodiment, by executing the TISV model trained to distinguish the speaker, the electronic device may obtain or generate the vectors 610, 620, and 630 corresponding to the frames 510, 520, and 530, respectively.

In an embodiment, the electronic device may execute the TISV model using a raw feature obtained from the frames 510, 520, and 530. For example, the electronic device may obtain or generate sound information (e.g., information indicating a spectrogram, a cepstrum, a spectrum, pitch, a zero-crossing rate) of the frame 510. By using the TISV model into which the sound information is inputted, the electronic device may obtain a feature vector 610 corresponding to the frame 510. The sound information may include information on frequency characteristic according to time of a waveform signal of the frame 510. The sound information may be used as an input of the TISV model based on the artificial neural network. Output data of the TISV model into which the sound information is inputted may include the feature vector. The TISV model may be trained to reduce a distance within a vector space between the feature vectors of the same speaker and to increase the distance within the vector space between the feature vectors of a different speaker.

The electronic device may determine the vectors 610, 620, and 630 corresponding to the frames 510, 520, and 530, respectively. The vectors 610, 620, and 630 may have a preset dimension and/or a preset size. All of the vectors 610, 620, and 630 may include one-dimensional numerical values (e.g., a floating-point number, and/or an integer) as an element. Obtaining any one of the vectors 610, 620, and 630 by the electronic device may include an operation of storing an array of elements included in the vector in memory (e.g., the memory 215 and/or the vector storage area 233 of FIG. 2). The vectors 610, 620, and 630 obtained by executing the TISV model may include the information on speakers of each of the frames 510, 520, and 530 corresponding to the vectors 610, 620, and 630, respectively.

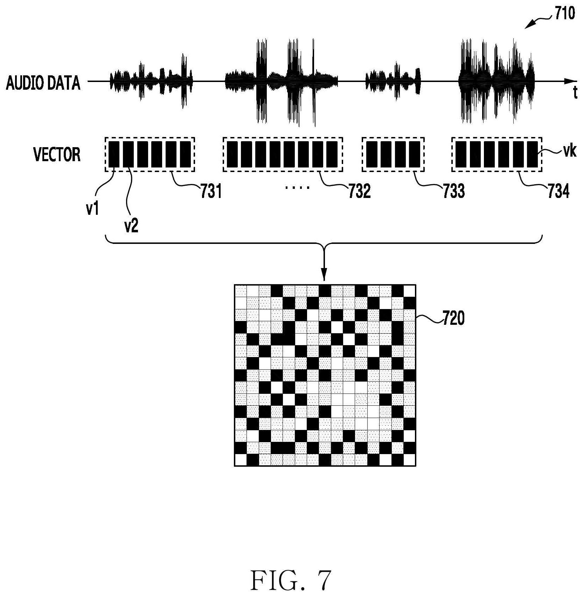

The electronic device that has obtained the vectors 610, 620, and 630 of the frames 510, 520, and 530 may perform clustering on the vectors 610, 620, and 630. Hereinafter, an operation of the electronic device performing the clustering of the frames corresponding to each of the frames will be described with reference to FIG. 7.

FIG. 7 illustrates an operation of an electronic device to calculate similarities between vectors associated with audio data 710 according to an embodiment of the disclosure. The electronic device 101 of FIGS. 1 and 2 and/or the processor 210 of FIG. 2 may perform the operation of the electronic device described with reference to FIG. 7. The operation of the electronic device described with reference to FIG. 7 may be associated with at least one (e.g., the operation 330) of the operations of FIG. 3.

Referring to FIG. 7, a state of the electronic device that has generated k vectors from audio data 710 is illustrated. The audio data 710 may correspond to one voice section detected by the electronic device. The k vectors (e.g., v1 - vk) generated from the audio data 710 may correspond to k frames divided from the audio data 710, respectively. According to an embodiment, the electronic device may calculate the similarities between the k vectors. The similarity may include cosine similarity (or a cosine distance) of vectors, a Euclidean distance, and/or a Manhattan distance.

In an embodiment, the electronic device may calculate the similarities between any two vectors among the k vectors. The electronic device may obtain or generate a similarity matrix 720 including the similarities as an element. The size of the similarity matrix 720 may be k×k. The element in the x row y column of the similarity matrix 720 may indicate the similarity between a x-th vector and a y-th vector, among k vectors. Since the element in the x row y column and the element in the y row x column coincide with each other, the similarity matrix 720 may be a symmetric matrix.

The electronic device may perform the clustering of the k vectors using the similarity matrix 720. The clustering of the vectors may include an operation of determining groups 731, 732, 733, and 734. The electronic device may generate or obtain the groups 731, 732, 733, and 734 by grouping the vectors adjacent in the time domain and having the similarities greater than threshold similarity by the similarity matrix 720. Each of the groups 731, 732, 733, and 734 may indicate that a time section including the frames corresponding to the vectors corresponding to the group includes a speech of a specific speaker. Each of the groups 731, 732, 733, and 734 may be determined as one time section in which the speech of the specific speaker is detected. For example, the groups 731, 732, 733, and 734 may correspond to each of the time sections included in the information 120 of FIG. 1.

An operation of the electronic device for calculating the similarities of the vectors, such as the cosine similarity, has been described, but the operation of clustering vectors is not limited thereto. For example, the electronic device may determine the groups 731, 732, 733, and 734 of the vectors by performing clustering algorithms such as K-Means, K-Medoids, Clustering Large Applications (CLARA), Clustering Large Applications based on RANdominated Search (CLARANS), and/or partitioning.

As described above with reference to FIG. 1, as the length of the audio data 710 increases, the number k of the vectors divided from the audio data 710 may increase. As the number k of the vectors increases, the size of the similarity matrix 720 may increase. Since the size of the similarity matrix 720 is k×k, the size of the similarity matrix 720 may increase according to the number of the vectors. The electronic device at least partially remove vectors generated from the audio data 710 to maintain the size of the similarity matrix 720, which is at least temporarily stored in the memory, below a threshold size, and to maintain or reduce the amount of calculation required to calculate the similarity matrix 720.

Hereinafter, an operation of the electronic device that performs a speaker diarization using the groups 731, 732, 733, and 734 of the vectors and stores the vectors included in the groups 731, 732, 733, and 734 will be described with reference to FIG. 8.

FIG. 8 illustrates an operation of an electronic device that performs the clustering of vectors 810 associated with audio data according to an embodiment of the disclosure. The electronic device 101 of FIGS. 1 and 2 and/or the processor 210 of FIG. 2 may perform the operation of the electronic device described with reference to FIG. 8. The operation of the electronic device described with reference to FIG. 8 may be associated with at least one (e.g., the operations 340 and 350) of the operations of FIG. 3.

Referring to FIG. 8, vectors 810 obtained from the audio data (e.g., the audio data 110 of FIG. 1, the audio data 410 of FIGS. 4 and 5, and/or the audio data 710 of FIG. 7) are illustrated. By using the similarities (e.g., elements of the similarity matrix 720 of FIG. 7) of the vectors 810, the electronic device may identify or detect a plurality of speakers. The electronic device may assign, to each of the vectors 810, an identity of any one of the plurality of identified speakers. Textures of each of the vectors 810 of FIG. 8 may express the speaker (or an ID of the speaker) corresponding to each of the vectors 810. For example, in a state of detecting four speakers, the electronic device may assign one of the speakers' IDs (e.g., ID 0, ID 3, ID 5, and/or ID 7) to each of the vectors 810.

Referring to FIG. 8, clusters 821, 822, 823, and 824 of the vectors corresponding to each of the speakers are illustrated. The groups 731, 732, 733, and 734 of the vectors of FIG. 7 may correspond to a speech section of a specific speaker, which is continuous in a time domain. clusters 821, 822, 823, and 824 may be obtained or generated by grouping the vectors 810 according to the speakers.

According to an embodiment, the electronic device may maintain a speaker diarization performance of the audio data to be additionally received by selectively storing one or more vectors in each of the clusters 821, 822, 823, and 824, maintaining the number of the vectors stored in memory and/or the amount of calculation required for clustering the vectors.

For example, the electronic device may extract a centroid of each of the clusters 821, 822, 823, and 824. The electronic device may selectively store the vectors adjacent to the extracted centroid. For example, within a cluster 821 corresponding to the speaker with an identity of ID 0, the electronic device may calculate the sum of the similarities of each of the m vectors in the cluster 821. For example, the sum of the similarities of a k-th vector in the cluster 821 may be the sum of the similarities of each of the k-th vector and m - 1 remaining vectors. Similarly, the electronic device may calculate or obtain sums of similarities of m vectors in the cluster 821.

For example, as a distance between the k-th vector and the m -1 remaining vectors is closer, the sum of the similarities of the k-th vector may increase. According to an embodiment, within the cluster 821, the electronic device may store only n (e.g., a natural number n less than m) vectors with the largest sum of similarities in the memory (e.g., the memory 215 and/or the vector storage area 233 of FIG. 2). In case that n is a preset value and the number of the vectors included in the cluster 821 is less than n, the processor may store all of the vectors included in the cluster 821 in the memory. For the vectors included in other clusters 822, 823, and 824 different from the cluster 821, the electronic device may perform a similar operation.

Referring to FIG. 8, the vectors included in each of the clusters 821, 822, 823, and 824 are illustrated by being aligned according to the sum of the similarities corresponding to each of the vectors. In each of the clusters 821, 822, 823, and 824, the vectors illustrated on the left side of a drawing may have a relatively large sum of similarities. In case that in each of the clusters 821, 822, 823, and 824, n vectors having a large sum of similarities are selectively stored, the electronic device may store only vectors included in a set 830. Among the vectors 810, other vectors not included in the set 830 may be removed from the memory (e.g., the memory 215 and/or the vector storage area 233 of FIG. 2) of the electronic device. In an embodiment of FIG. 8 in which four speakers are detected, the electronic device may selectively store 4×n vectors.

Although the operation of the electronic device selectively storing the vectors having a large sum of similarities has been described, an embodiment is not limited thereto. For example, the electronic device may arbitrarily select the vectors lower than or equal to the preset number among the vectors 810. For example, the electronic device may store centroid vectors of the vectors included in the cluster (e.g., any one of the clusters 821, 822, 823, 824) corresponding to the specific speaker in the memory of the electronic device. The vectors selectively stored in the memory and associated with each of the clusters 821, 822, 823, and 824 may be referred to as representative vectors for each of the clusters 821, 822, 823, and 824.

The operation of the electronic device filtering the vectors or selectively storing the vectors described with reference to FIG. 8 may be conditionally performed based on the number of the vectors accumulated (e.g., stored in the memory of the electronic device) in the electronic device. For example, in case that the number of vectors stored in the electronic device exceeds a threshold number, the electronic device may, by performing the operation described with reference to FIG. 8, store the vectors lower than or equal to the product (e.g., n) of the upper limit of the number of the speaker associated with the audio data and the number of the vectors associated with the specific speaker. An embodiment is not limited thereto, and the electronic device may repeatedly filter the vectors or selectively store the vectors at a preset period while obtaining the audio data.

In an embodiment, the threshold number used to adjust the number of the vectors stored in the electronic device may be adjusted according to a state of the electronic device. For example, the electronic device may determine whether to adjust the threshold number, using a period required to perform the clustering of the vectors lower than or equal to the threshold number. Using the state (e.g., an active state and/or temperature of each of big core circuitry and/or little core circuitry) of the processor (e.g., the processor 210 of FIG. 2) used for the clustering, the electronic device may schedule, predict, or determine the amount of calculation associated with the clustering and/or the period required to perform calculation associated with the clustering. The electronic device may decrease the threshold number in case (e.g., in case that the period is predicted to exceed the preset period) that the period required to perform the calculation associated with the clustering is increased. In case that the threshold number is decreased, the number of the vectors maintained in the memory of the electronic device may be reduced, and the amount of calculation required to calculate the similarity of the vectors may be reduced.

An embodiment in which the threshold number is adjusted according to the state of the processor has been described, but an embodiment is not limited thereto. The electronic device may increase or decrease the threshold number according to the state of charge (SOC) of a battery and/or the temperature of the electronic device. For example, in case (e.g., the threshold for the operation in a low power state) that the SOC of the battery is less than the threshold, the electronic device may reduce the threshold number or at least temporarily stop the speaker diarization. For example, in case that the battery is charged or the SOC of the battery exceeds the threshold, the electronic device may resume the speaker diarization, or maintain or increase the threshold number. For example, in case (e.g., the threshold set for throttling) that the temperature of the electronic device exceeds the threshold, the electronic device may reduce the threshold number or at least temporarily stop the speaker diarization. For example, in case that the temperature of the electronic device is lower than or equal to the threshold, the electronic device may resume the speaker diarization, or maintain or increase the threshold number.

In an embodiment, the electronic device may communicate with a server configured to perform the speaker diarization and request the speaker diarization. In the example, in case that the threshold number is reduced to a preset lower limit or at least temporarily stops the speaker diarization, the electronic device may request the speaker diarization with respect to the audio data to the server. In case that the electronic device receives the audio data through a microphone (e.g., the microphone 225 of FIG. 2), the electronic device may transmit a signal (e.g., a signal including a bitstream for streaming the audio data) associated with the audio data to the server together with the request. In order to perform the speaker diarization using the server, at least one communication link may be established between the electronic device and the server.

In an embodiment, the electronic device may apply the threshold number for maintaining the vectors differently according to the plurality of speakers associated with the audio data. For example, among the vectors of the user's cluster 821 with an identity of ID 0, the electronic device may store, filter, or select the vectors lower than or equal to a first threshold number. In the example, among the vectors of the cluster 822 having the identity of ID 3, the electronic device may selectively store the vectors of a second threshold number determined independently of the first threshold number. The first threshold number and/or the second threshold number may be changed according to a distribution characteristic within a vector space of feature vectors corresponding to each of the speakers. For example, in case that the vectors included in the cluster 821 have relatively dense positions within the vector space, the electronic device may determine the first threshold number as a value lower than the second threshold number. For example, in case that the vectors associated with a user with an identity of ID 0 corresponding to the cluster 821 are relatively spaced apart from the other clusters 822, 823, and 824 within the vector space, the electronic device may adjust the first threshold number to a value smaller than the other threshold number (e.g., the second threshold number).

In an embodiment, the electronic device may set the threshold number corresponding to a main user (e.g., a user indicated by account information logged in the electronic device) of the electronic device to be smaller than the threshold number used to maintain the vectors of other speakers. For example, the electronic device may perform the speaker diarization using the vectors that are stored in advance in the memory and correspond to the main user, and may maintain the vectors corresponding to the main user, among the vectors identified from the audio data, in the number smaller than the threshold number corresponding to the other speaker. In this case, the vectors used to distinguish the main user may be stored in a relatively small number in the memory of the electronic device.

As described above with reference to the similarity matrix 720 of FIG. 7, since the number of the vectors is proportional to the number of the similarities between the vectors, the amount of calculation required to calculate the similarities may be relatively significantly changed according to the change in the threshold number. The electronic device may effectively adjust the amount of calculation required for clustering the vectors based on the similarities by adjusting the threshold number.

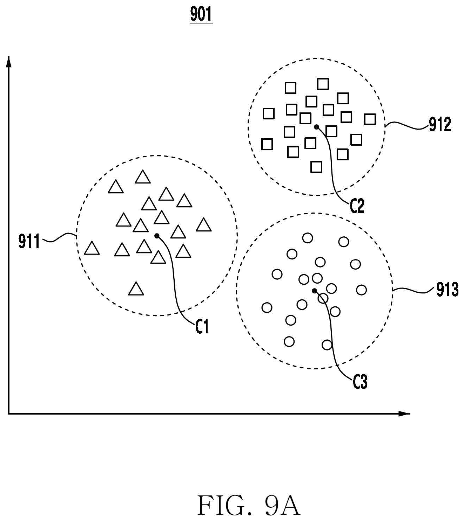

Hereinafter, a change in the number of the vectors stored or maintained in the electronic device while receiving the audio data will be described with reference to FIGS. 9A to 9D.

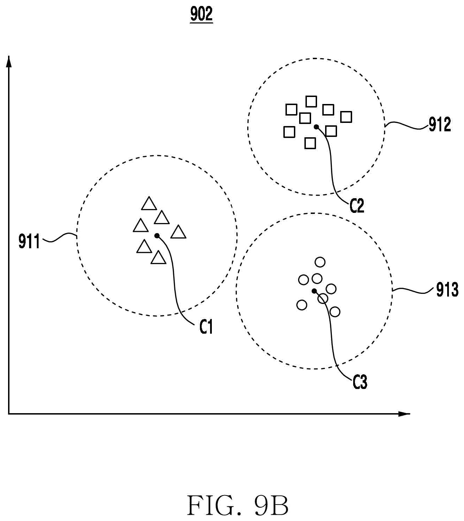

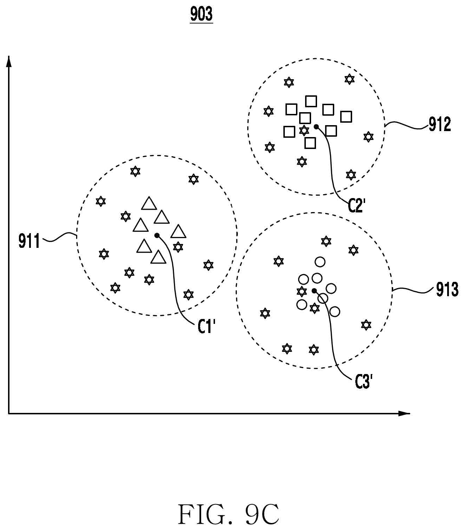

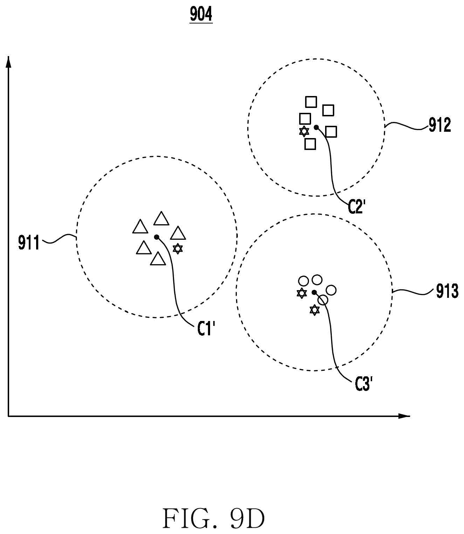

FIGS. 9A, 9B, 9C, and 9D illustrate an operation of an electronic device for filtering vectors associated with audio data according to various embodiments of the disclosure. The electronic device 101 and/or the processor 210 of FIGS. 1 and 2 may perform the operation of the electronic device described with reference to FIGS. 9A to 9D. The operation of the electronic device described with reference to FIGS. 9A to 9D may be associated with the operations of FIG. 3.

Referring to FIGS. 9A to 9D, states 901, 902, 903, and 904 of the vectors stored in the electronic device at different time points while receiving the audio data are illustrated. Referring to FIGS. 9A to 9D, distribution of simplified vectors in a two-dimensional vector space is illustrated. The vectors and/or a dimension of the vector space are not limited to an embodiment of FIGS. 9A to 9D.

Referring to FIG. 9A, a state 901 of the vectors clustered by the electronic device are illustrated at a first time point when the audio data is received. Since the vector is generated by a model (e.g., a TISV model) for distinguishing a speaker, a distance between the vectors within the vector space may be associated with whether the speaker of each of the vectors matches.

In the state 901 of FIG. 9A in which a voice section and/or an end point of the voice section are detected, the electronic device may perform clustering of the vectors. For example, the electronic device may identify or generate clusters 911, 912, and 913 corresponding to each of the three speakers. Frames corresponding to the vectors (e.g., the vectors expressed in a shape of a triangle (△)) included in a first cluster 911 may be determined to include a speech of a first speaker associated with the first cluster 911. Frames corresponding to the vectors (e.g., the vectors expressed in a shape of a square (□)) included in a second cluster 912 may be determined to include a speech of a second speaker associated with the second cluster 912. Frames corresponding to the vectors (e.g., the vectors expressed in a shape of a circle (○)) included in a third cluster 913 may be determined to include a speech of a third speaker associated with the third cluster 913.

In the state 901 of FIG. 9A, in the state in which a plurality of the speakers for the plurality of the frames corresponding to the vectors are determined, the electronic device may determine whether to store each of the vectors, using similarities between the vectors determined using groups (e.g., the clusters 911, 912, and 913) within the vector space corresponding to each of the plurality of the speakers. The electronic device may determine whether to store each of the vectors by using distribution of the vectors within the vector space based on the number of the vectors greater than a threshold number.

Referring to FIG. 9A, the electronic device that detects the vectors greater than the threshold number may selectively store the vectors in memory. Based on the operation described with reference to FIG. 8, the electronic device may selectively store the vectors having a relatively large sum of the similarities in each of the clusters 911, 912, and 913. For example, in case that it is set to selectively store six vectors in each of the clusters 911, 912, and 913, the electronic device may extract 18 vectors. Referring to FIG. 9B, a state 902 in which the vectors having the relatively large sum of similarities are selected is illustrated. Among the vectors of FIG. 9A, the vectors with the relatively small sum of similarities may be deleted from the memory of the electronic device. Referring to FIG. 9B, centroid vectors c1, c2, and c3 of each of the clusters 911, 912, and 913 are illustrated. The vectors with the relatively large sum of similarities may be positioned relatively close to the centroid vectors c1, c2, and c3 in each of the clusters 911, 912, and 913.

In an embodiment, the electronic device may store the centroid vectors c1, c2, and c3 of the clusters 911, 912, and 913 in the memory as a representative vector to be used for clustering. In an embodiment, the electronic device may selectively store the vectors adjacent to the centroid vector (e.g., the center vectors c1, c2, and c3) in each of the clusters 911, 912, and 913. In order to identify the vector adjacent to the centroid vector, the electronic device may calculate or determine a distance between the centroid vector and the vector.

In the state 902 of FIG. 9B corresponding to a second time point after the first time point of FIG. 9A, the vectors stored by the electronic device may be used for a speaker diarization after the second time point. For example, in the state 902 of FIG. 9B, the vectors included in each of the clusters 911, 912, and 913 may be stored in the memory to identify at least one speaker in a part of the corresponding audio data after the second time point.

Since a length of the audio data increases while obtaining the audio data using a microphone (e.g., the microphone 225 of FIG. 2), the number of the vectors obtained from the audio data may increase. Referring to FIG. 9C, a state 903 of the vector space at a third time point after the second time point corresponding to the state 902 of FIG. 9B is illustrated. Since the electronic device generates additional frames from the audio data and the vectors corresponding to the frames, the vectors (e.g., the vectors expressed in the shape of a star ( 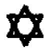 )) may be added to the vector space. Within the state 903 of FIG. 9C, the electronic device may generate or determine the clusters 911, 912, and 913 corresponding to each of the plurality of the speakers by performing clustering on the vectors in the vector space.

For example, the vectors included in the first cluster 911 and expressed in the shape of the star ( 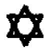 ) may be determined to correspond to the frames including the speech of the first speaker of the first cluster 911. For example, the vectors included in the second cluster 912 and expressed in the shape of the star ( 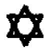 ) may be determined to correspond to the frames including the speech of the second speaker of the second cluster 912. For example, the vectors included in the third cluster 913 and expressed in the shape of the star ( 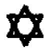 ) may be determined to correspond to the frames including the speech of the third speaker of the third cluster 913. In the state 903 of FIG. 9C, the electronic device may further store information indicating one or more time sections from the second time point to the third time point and a relationship between the plurality of speakers in the memory.

In an embodiment, the electronic device may designate or assign identities of the first speaker to the third speaker assigned to the first cluster 911 to the third cluster 913 with the vectors included in the first cluster 911 to the third cluster 913. Within the state 903 of FIG. 9C, any one of the identities of the first speaker to the third speaker may be assigned to each of the vectors (e.g., the vectors expressed in the shape of the star ( 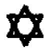 )) added to the vector space.

Referring to FIG. 9C, in case that the vectors greater than the threshold number are detected, the electronic device may perform filtering the vectors in each of the clusters 911, 912, and 913. The electronic device may maintain a preset number of the vectors in each of the clusters 911, 912, and 913, and discard the remaining vectors. Referring to FIG. 9D, a state 904 in which a preset number of vectors are selected from each of the clusters 911, 912, and 913 is illustrated after the state 903 of FIG. 9C.

Within the state 904 of FIG. 9D, since the electronic device maintains the vectors with the relatively large sum of similarities in each of the clusters 911, 912, and 913, only vectors adjacent to each of centroid vectors c1', c2', and c3' of the clusters 911, 912, and 913 may be stored, and the remaining vectors may be deleted from the memory (e.g., the memory 215 and/or the vector storage area 233 of FIG. 2) of the electronic device. Within the state 904 of FIG. 9D, the vectors stored in the memory may be used the speaker diarization of the audio data received after the state 904. The vectors stored in the memory within the state 904 may be used to identify one or more speakers (e.g., the speakers corresponding to each of the clusters 911, 912, and 913) that are commonly associated with the part of the corresponding the audio data before the state 904 and all other part of the corresponding the audio data after the state 904.

For example, when 3500 vectors are stored, the electronic device may perform filtering the vectors described with reference to FIG. 8, and/or FIGS. 9A to 9D. For example, within the cluster of the vectors corresponding to a specific speaker, the electronic device may maintain 150 vectors and discard or remove the remaining vectors. In the example, in case that the electronic device identifies 10 clusters corresponding to each of the 10 speakers, the electronic device may reduce the number of the vectors stored in the memory to 1500 at the time point when 3500 vectors are stored. At the time point, the vectors stored in the memory may be reduced by about 57%.

Before reducing the number of the vectors, in order to calculate the similarities between 3500 vectors, the electronic device may repeatedly perform calculating the similarities between two vectors among 3500 vectors 6,123,250 times (= 3500C2). After reducing the number of the vectors, the electronic device may repeatedly perform calculating the similarities between the two vectors of 1500 vectors 1,124,250 times (=1500C2) to calculate the similarities between 1500 vectors (as an example for convenience of description, as audio data is obtained, the number of the vectors will increase from 1500). For example, the number of times of performing calculating the similarities may be reduced by about 82%. That is, speed at which the similarities are calculated may be increased.

Hereinafter, the operation of the electronic device described with reference to FIGS. 1 to 8, FIGS. 9A to 9D will be described with reference to FIG. 10.

FIG. 10 illustrates a flowchart of an electronic device according to an embodiment of the disclosure. The electronic device 101 of FIGS. 1 and 2 and/or the processor 210 of FIG. 2 may perform operations of the electronic device described with reference to FIG. 10. The operations of FIG. 10 may be associated with at least one of the operations of FIG. 3. The order in which the operations of FIG. 10 are performed is not limited to the order illustrated in FIG. 10, and may be performed substantially simultaneously, or may be performed in the order different from the order illustrated in FIG. 10.

Referring to FIG. 10, within an operation 1010, the processor of the electronic device according to an embodiment may obtain first vectors corresponding to each of a plurality of frames of audio data (e.g., the audio data 110 of FIG. 1, the audio data 410 of FIGS. 4 and 5, and/or the audio data 710 of FIG. 7). For example, while obtaining the audio data using the microphone 225 of FIG. 2, the processor may obtain the plurality of frames by dividing the audio data. The processor may obtain the first vectors of the operation 1010, respectively corresponding to the plurality of frames. The operation 1010 of FIG. 10 may be performed similarly to the operations 310 and 320 of FIG. 3.

Referring to FIG. 10, within an operation 1020, the processor of the electronic device according to an embodiment may determine a speaker of each of the plurality of frames by performing clustering of the first vectors and/or second vectors stored in the memory. The second vectors may have been obtained by performing a speaker diarization for another part obtained before the part of the audio data including the plurality of frames of the operation 1010. In case that the operation 1010 is first performed after obtainment of the audio data using the microphone is initiated, no second vectors may be stored in the memory. In this case, the processor may perform an operation 1030 after the operation 1020 by using only the first vectors of the operation 1010. The operation 1020 of FIG. 10 may be performed similarly to operations 330 and 340 of FIG. 3.

The operation 1020 of FIG. 10 may include the operation of the electronic device described with reference to FIGS. 7 and 8, and/or 9A to 9D. For example, by grouping the first vectors of the operation 1010 and the second vectors of the operation 1020, the processor may obtain or generate one or more groups (e.g., the clusters 911, 912, and 913 of FIGS. 9A to 9D) including at least one of the first vectors and the second vectors. Using the group including each of the first vectors, the processor may determine the speaker corresponding to each of the first vectors.

Referring to FIG. 10, within the operation 1030, the processor of the electronic device according to an embodiment may store information indicating the speaker of at least one time section of the audio data. The information in operation 1030 may include the information 120 of FIG. 1. For example, the processor may store the information indicating the speaker of at least one time section of the audio data, determined using the speaker corresponding to each of the first vectors of the operation 1010, in the memory. The information stored in the operation 1030 may include a combination of a numerical value (e.g., an identity) indicating a specific speaker, a starting point of a specific time section of the audio data in which a speech of the specific speaker is recorded, and an end point of the specific time section.

Referring to FIG. 10, within an operation 1040, the processor of the electronic device according to an embodiment may determine whether the number of the first vectors and the second vectors exceeds a preset number. For example, the processor may determine whether the total number of the first vectors and the second vectors, and/or the sum of the number of the first vectors and the second vectors exceeds the preset number of the operation 1040. The preset number of the operation 1040 may correspond to a threshold number described with reference to FIGS. 8, and/or 9A to 9D. In case that the number of the first vectors and the second vectors exceeds the preset number (1040-Yes), the processor may perform an operation 1050. In case that the number of the first vectors and the second vectors is lower than or equal to the preset number (1040-No), the processor may perform an operation 1060.

Referring to FIG. 10, within the operation 1050, the processor of the electronic device according to an embodiment may store the vectors lower than or equal to the preset number of the operation 1040 among the first vectors and/or the second vectors. Based on the total number of the first vectors and the second vectors exceeding the preset number of the operations 1040, the processor may delete at least one of the first vectors of the operation 1010 and the second vectors of the operation 1020 from the memory in order to adjust the total number to be lower than or equal to the preset number. The operation 1050 of FIG. 10 may be performed similarly to the operation of the electronic device described with reference to FIGS. 8, and/or 9A to 9D. The processor may selectively store the vectors lower than or equal to the preset number by filtering the vectors in each of the groups formed in the vector space by the clustering of the operation 1020. The number of vectors stored in the memory may be reduced by the processor that has performed the operation 1050.

Referring to FIG. 10, within the operation 1060, the processor of the electronic device according to an embodiment may store the first vectors and the second vectors. Based on the total number of first vectors and second vectors lower than or equal to the preset number of the operation 1040, the processor may perform the operation 1060. For example, the processor may store the first vectors of the operation 1010 in the memory (e.g., the memory 215 and/or the vector storage area 233 of FIG. 2). Within the operation 1060, the electronic device may store the first vector of the operation 1010 in the memory together with the second vectors stored in the memory. After performing any one of the operations 1050 and 1060 of FIG. 3, the processor may repeatedly perform the operation of FIG. 10 with respect to the remaining part of the continuously received audio data. For example, the processor may repeatedly perform the operation of FIG. 10 until the obtainment of the audio data is completed.

Hereinafter, an operation of an electronic device displaying the information obtained by performing the speaker diarization according to an embodiment will be described with reference to FIGS. 11A and/or 11B.

FIGS. 11A and 11B illustrate a user interface (UI) displayed by an electronic device 101 according to various embodiments of the disclosure. The electronic device 101 of FIGS. 1 and 2 and/or the processor 210 of FIG. 2 may perform the operation of the electronic device described with reference to FIGS. 11A and 11B. The operations of FIGS. 11A and 11B may be associated with at least one of the operations of FIGS. 3 and/or 10.

Referring to FIGS. 11A and 11B, states 1101, 1102, 1103, and 1104 of the electronic device 101 executing a recording application (e.g., the recording application 230 of FIG. 2) that supports a function associated with audio data are illustrated. In response to an input indicating execution of the recording application, the electronic device 101 may display a screen provided from the recording application on a display 220. Referring to a state 1101 of FIG. 11A, the electronic device 101 may display a screen including a visual object 1116 for initiating the obtainment of the audio data through a microphone (e.g., the microphone 225 of FIG. 2) of the electronic device 101 on the display 220. The visual object 1116 may have a red circle shape. The visual object 1116 may be referred to as a recording button.

Within the state 1101 of FIG. 11A, the electronic device 101 may display a plurality of visual objects 1117, 1118, and 1119 for switching the screen displayed on the display 220. An area adjacent to the lower end of the display 220 including the plurality of the visual objects 1117, 1118, and 1119 may be referred to as a navigation bar. The visual object 1117 corresponding to the function for displaying a list of one or more screens displayed on the display 220 may be referred to as a multitasking button. The visual object 1118 corresponding to the function for displaying a preset screen (e.g., a home screen, and/or a screen referred to as a launcher screen) may be referred to as a home button. The visual object 1119 corresponding to the function for sequentially displaying at least one screen displayed before the screen displayed in a current state (e.g., the state 1101) may be referred to as a backward button.

Within the state 1101 of FIG. 11A, the electronic device 101 may display the screen including visual objects 1111, 1112, 1113, 1114, 1115, 1116, and 1121 corresponding to different functions associated with recording. The visual object 1111 is the screen different from the screen displayed in the state 1101 of FIG. 11A and may correspond to the function for displaying the list of one or more audio files, including the audio data recorded by the electronic device 101. The visual object 1112 may correspond to the function for changing a setting value of a software application (e.g., the recording application 230 of FIG. 2) executed by the electronic device 101.

The visual object 1113 may correspond to a first mode for performing the recording. The visual object 1114 may correspond to a second mode for recording a speech generated in a specific direction using the plurality of microphones. By performing a speaker diarization, the visual object 1115 may correspond to a third mode for obtaining a transcript (or recording) corresponding to the audio data recorded by the electronic device 101. Information obtained in the third mode may include the information 120 of FIG. 1. Referring to the state 1101 of FIG. 11A, the electronic device 101 may display the screen associated with the third mode. Within the state 1101, the electronic device 101 may emphasize the visual object 1115 corresponding to the third mode compared to the visual objects 1113 and 1114.

Within the state 1101 of FIG. 11A, the electronic device 101 may display the screen including the area 1120. Within the area 1120, the electronic device 101 may display the visual object 1121 for selecting a language pack (e.g., a language package, and/or a language file) to be used for analysis (e.g., a STT) of the audio data. In response to the input indicating selection of the visual object 1121, the electronic device 101 may display, on the display 220, a pop-up window (or menu) for adjusting the language pack. The language pack may include the information to be used to process or analyze the audio data, such as a STT. Referring to the visual object 1121, the electronic device 101 may use any one of the plurality of language packs classified according to a natural language category (e.g., language) and/or type to analyze the audio data. For example, after the state 1101 in which the language pack corresponding to Korean is selected, the electronic device 101 may generate or display text expressed in Korean by analyzing the audio data using the information included in the language pack.

Within the state 1101 of FIG. 11A, in response to the input indicating selection of the visual object 1116, the electronic device 101 may initiate obtaining the audio data. For example, the electronic device 101 may initiate obtaining the audio data by controlling the microphone. In response to the input, the electronic device 101 may switch from the state 1101 of FIG. 11A to the state 1102 of FIG. 11A.

Referring to FIG. 11A, the state 1102 of the screen displayed by the electronic device 101 obtaining the audio data using the microphone is illustrated. While obtaining the audio data, the electronic device 101 may display the text 1124 indicating a length of the audio data (e.g., 15.09 seconds within a state 1102 of FIG. 11A). While obtaining the audio data, a numerical value included in the text 1124 may be gradually increased. The electronic device 101 may display the visual object 1123 mapped to an attribute (e.g., an attribute indicating whether it has been added to a favorite list) of the audio data being obtained within the state 1102.

Referring to FIG. 11A, within the state 1102 of obtaining the audio data, the electronic device 101 may display visual objects 1127, 1128, and 1129 for controlling the obtainment of the audio data. The electronic device 101 may display the visual object 1128 corresponding to the function for temporarily stopping the obtainment of the audio data, and/or the visual object 1129 mapped to the function for storing a file corresponding to the audio data. The visual object 1128 may be referred to as a pause button. The visual object 1129 may be referred to as a stop button. The electronic device 101 may display the visual object 1127 mapped to the function for playing the audio data obtained in the state 1102. The visual object 1127 may be referred to as a play button.

Within the state 1102 of FIG. 11A, while obtaining the audio data, the electronic device 101 may deactivate the visual object 1127. For example, despite a touch input on the visual object 1127, the electronic device 101 may not perform any function associated with the touch input. In response to the input indicating selection of the visual object 1128, the electronic device 101 may at least temporarily stop obtaining the audio data, deactivate the visual object 1128, and/or activate the visual object 1127. In response to the input indicating the selection of the activated visual object 1127, the electronic device 101 may resume obtaining the audio data, deactivate the visual object 1127, and/or activate the visual object 1128.

In the state 1102 of FIG. 11A, the electronic device 101 may display, within the area 1120, a result of performing the speaker diarization of the audio data being obtained within the state 1102. For example, along the top to bottom of the area 1120, the electronic device 101 may display the speaker (e.g., the speakers of each of the visual objects (e.g., icons) including A, B, and C of FIG. 11A) sequentially separated from a time domain, and the text indicating the speech of the speaker. While obtaining the audio data, the electronic device 101 may display one or more texts and the visual object expressing at least one speaker corresponding to the one or more texts within the area 1120 according to the result of performing the speaker diarization (e.g., the speaker diarization described with reference to FIGS. 1 to 8, 9A to 9D, and 10). Since the area 1120 has a limited size, the electronic device 101 may cause the last obtained text by performing the speaker diarization to be displayed on the area 1120 by performing scrolling on the area 1120.

Referring to FIG. 11A, within the area 1120, the electronic device 101 may display the visual object 1122 mapped to the function for adding a bookmark to the current time point in the entire time section of the audio data. Within the state 1102 of FIG. 11A, the electronic device 101 receiving the input indicating the selection of the visual object 1122 may store the information indicating that the time point (e.g., 15 seconds 9) at which the input is received is set as the bookmark by a user in the entire time section of the audio data. The electronic device 101 receiving the input may further display the visual object and/or icon indicating the setting of the bookmark on a timeline displayed through an area 1125.

In an embodiment, the speaker diarization may be repeatedly performed by the electronic device 101 while obtaining the audio data. According to an embodiment, the electronic device 101 may display the result (e.g., the information 120 of FIG. 1) of performing the speaker diarization on the display 220 before obtaining the audio data. For example, the electronic device 101 may display the result of performing the speaker diarization within the area 1120 of the display 220.

While obtaining the audio data, the electronic device 101 may visualize (e.g., a waveform of a sound associated with the audio data) the audio data obtained by the electronic device 101 within the area 1125. While obtaining the audio data, the electronic device 101 may display the waveform of the sound associated with the audio data in the left part of the area 1125 based on an indicator 1126 indicating the current time point.

Within the state 1102 of FIG. 11A, the electronic device 101 obtaining continuously the audio data may determine whether to stop obtaining the audio data according to an available capacity of the memory (e.g., the memory 215 of FIG. 2). For example, in case that the size of the audio data obtained within the state 1102 exceeds the available capacity of the memory or exceeds a preset percentage of the available capacity, the electronic device 101 may stop obtaining the audio data. For example, in response to the input indicating the selection of the visual object 1129, the electronic device 101 may stop obtaining audio data. The electronic device 101 that has stopped obtaining the audio data may display the result of performing the speaker diarization within the area 1120, or may store the result in the memory.

Within the state 1101 of FIG. 11A, the electronic device 101 receiving the input indicating the selection of the visual object 1111 may switch to the state 1103 of FIG. 11B. Within the state 1103 of FIG. 11B, the electronic device 101 may display the list of the plurality of the audio files (e.g., the file including the audio data) stored in the electronic device 101. The list may be displayed within an area 1133 of the screen. Within the scrollable area 1133, the electronic device 101 may display items corresponding to each of the plurality of files. The electronic device 101, together with the area 1133, may display visual objects 1131 and 1132 for adjusting an option of displaying the audio files in the area 1133. The visual object 1131 may be matched to the function of displaying the list of all audio files stored in the electronic device 101 on the area 1133. The visual object 1132 may be matched to the function of displaying the list of at least one audio file corresponding to a specific classification among the audio files stored in the electronic device 101 on the area 1133.

Referring to the state 1103 of FIG. 11B, within the area 1133 of the screen, the electronic device 101 may display an item object corresponding to a specific audio file. The item object may include the icon (e.g., the visual object referred to as the play button) that causes playback of the audio file. Referring to FIG. 11B, within an item object 1134, the electronic device 101 may display a name of the audio file (e.g., "Recording_20231111"), the length of the audio file (e.g., 10:03:12.24), and the date when the audio file is stored (e.g., "11 NOV 2023," indicating November 11, 2023) together with the icon. Within the item object 1134, the electronic device 101 may display an indicator 1135 for notifying transcript information for the audio file corresponding to the item object 1134. The indicator 1135 may be referred to as an icon, image, and/or a visual object.

In response to the input indicating the selection of the item object 1134 within the state 1103 of FIG. 11B, the electronic device 101 may switch to the state 1104 for playing the audio file corresponding to the item object 1134. Within the state 1104, the electronic device 101 may display the screen for controlling playback of the audio file. Referring to FIG. 11B, within the state 1104, the electronic device 101 may display a visual object 1141 for adjusting an attribute (e.g., an attribute indicating whether the audio file has been added to the favorite list) of the audio file, a visual object 1142 for changing the name (e.g., a file name) of the audio file, and a visual object 1143 for displaying a menu including options associated with the playback of the audio file.

Within the state 1104 of FIG. 11B, the electronic device 101 may display an area 1146 for visualizing the waveform of the audio file. The area 1146 may be referred to as a timeline. Within the state 1104, the electronic device 101 may display text 1145 indicating the length of the audio file (e.g., 10:03:12. 24). Within the state 1104, the electronic device 101 may display text 1144 indicating the time point of the audio file currently being played. In the state 1104 of FIG. 11B, the electronic device 101 may play a part corresponding to 1 second 21 of the audio file.

Within the state 1104, the electronic device 101 may display visual objects 1151, 1152, 1153, 1154, 1155, and 1156 for controlling the playback of the audio file. The visual object 1151 may be mapped to the function for mute. The visual object 1152 may be mapped to the function for repetitive playback of a section of the audio file. The visual object 1153 may be mapped to the function for adjusting the playback speed of the audio file. The visual object 1154 may be mapped to the function for playing the part of the audio file corresponding to the time point (e.g., the time point 3 seconds before) in the past than the time point currently being played. The visual object 1156 may be mapped to the function for playing the part of the audio file corresponding to the time point (e.g., the time point after 3 seconds) after the time point currently being played. The visual object 1155 may be mapped to the function for at least temporarily stopping playback of the audio file.

Within the state 1104, the electronic device 101 may display the result of detecting the speech sections of one or more speakers from the audio file obtained by performing the speaker diarization through an area 1147. Referring to FIG. 11B, the area 1147 including texts corresponding to the speeches of three speakers (e.g., A, B, and C) is exemplarily illustrated. As the audio file is played, the electronic device 101 may change the text displayed through the area 1147 according to the speech of the speakers at the time point at which the audio file is being played. The text may be generated using information (e.g., the information 120 of FIG. 1) obtained by performing the speaker diarization, for example, the operation described with reference to FIGS. 1 to 8, 9A to 9D, and 10. The electronic device 101 may display the position in the text corresponding to the part of the audio file currently being played through the electronic device 101 by at least partially emphasizing the text displayed through the area 1147.

Within the state 1104, by using the area 1146, the electronic device 101 may visualize the speech section corresponding to each of the speakers associated with the audio file. For example, the electronic device 101 may at least partially change a color of the waveform displayed in the area 1146, according to the speech section. For example, the color of the waveform at a specific point may have the color corresponding to any one of the speakers associated with the audio file. Referring to FIG. 11B, in the area 1146, the electronic device 101 may include bar-shaped visual objects 1161, 1162, and 1163 indicating the speech section of each of speakers associated with an audio file. The visual objects 1161, 1162, and 1163 having the shape of a horizontal arrow extended from the names (e.g., A, B, and C) of the speakers are illustrated, but an embodiment is not limited thereto.

Each of the bar-shaped visual objects 1161, 1162, and 1163 may correspond to each of the speech sections detected from the audio file. For example, the visual object 1161 may indicate the time section in which the speech (e.g., "Hello.") of A is recorded among the speakers. The position of a starting point and an end point of the visual object 1161 in the area 1146 may correspond to the starting point and the end point of the time section, respectively. Similarly, the visual object 1162 may indicate the time section in which the speech (e.g., "Do you have time?") of B is recorded among the speakers. The starting point, the end point, and the length of the visual object 1162 within the area 1146 may indicate the starting point, end point, and the length of the time section in which the speech of B is recorded. As the audio file is played, the waveforms, and/or the visual objects 1161, 1162, and 1163 may be scrolled within the area 1146. For example, the waveforms, and/or the visual objects 1161, 1162, and 1163 may be scrolled along a direction from the right periphery to the left periphery of the area 1146.

As described above, according to an embodiment, the electronic device 101 may perform the speaker diarization on the audio file (or the audio data). In order to reduce the amount of calculation required to perform the speaker diarization or to prevent an exponential increase in the amount of the calculation, the electronic device 101 may repeatedly reduce the information (e.g., the vectors corresponding to each of the frames of the audio data) used for the speaker diarization. The reduction of the information may be performed to ensure performance of the speaker diarization.

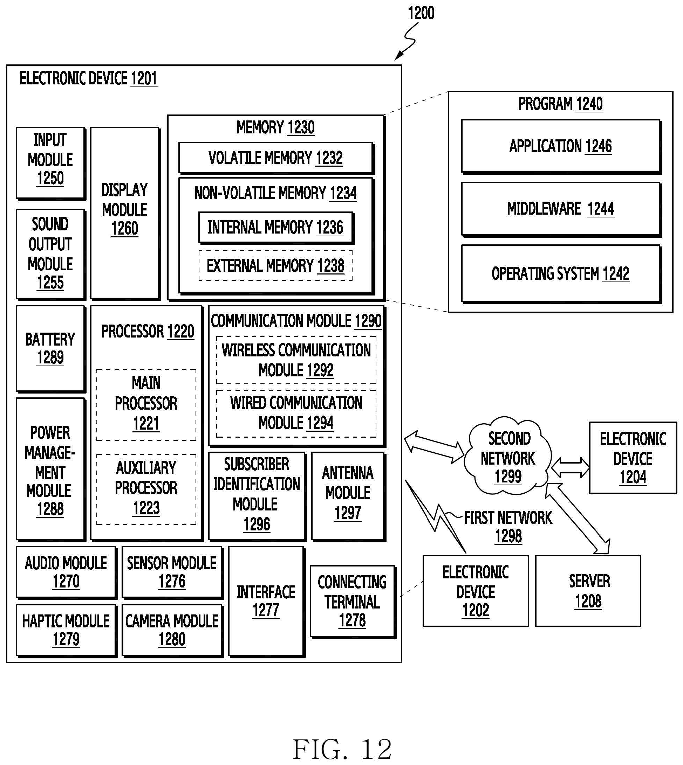

FIG. 12 is a block diagram illustrating an electronic device 1201 in a network environment 1200 according to an embodiment of the disclosure. Referring to FIG. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, an HDMI connector, a USB connector, an SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the millimeter wave (mmWave) band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 1201 of FIG. 12 may be an example of the electronic device 101 described with reference to FIGS. 1 to 8, 9A to 9D, 10, and/or 11A and 11B. For example, the memory 1230 of FIG. 12 may correspond to the memory 215 of FIG. 2. For example, the display module 1260 of FIG. 12 may correspond to the display 220 of FIG. 2. For example, the processor 1220 of FIG. 12 may correspond to the processor 210 of FIG. 2. For example, the audio module 1270 and/or the sensor module 1276 of FIG. 12 may at least partially include the microphone 225 of FIG. 2.

In an embodiment, a method of efficiently managing or reducing a resource (e.g., memory occupancy, amount of calculation, and/or calculation time) of an electronic device occupied for a speaker diarization may be required. As described above, an electronic device (e.g., the electronic device 101 of FIG. 1 and/or the electronic device 1201 of FIG. 12) according to an embodiment may include a microphone (e.g., the microphone 225 of FIG. 2), at least one processor (e.g., the processor 210 of FIG. 2) including processing circuitry, memory (e.g., the memory 215 of FIG. 2) including one or more storage media storing instructions. The instructions, when executed by the at least one processor individually or collectively, may cause the electronic device to, while obtaining audio data (e.g., audio data 110 of FIG. 1, audio data 410 of FIGS. 4 and 5, and/or audio data 710 of FIG. 7) by using the microphone, obtain a plurality of frames (e.g., frames 510, 520, and 530 of FIGS. 5 and 6) by dividing the audio data. The instructions, when executed by the at least one processor individually or collectively, may cause the electronic device to obtain first vectors (the vectors 610, 620, and 630 of FIG. 6) respectively corresponding to the plurality of frames. The instructions, when executed by the at least one processor individually or collectively, may cause the electronic device to determine a speaker corresponding to each of the first vectors by using groups in which the first vectors are respectively included, which are obtained by grouping the first vectors, and second vectors stored in the memory. The grouping of the first vectors, and the second vectors may be performed by the at least one processor. The instructions, when executed by the at least one processor individually or collectively, may cause the electronic device to store, within the memory, information (e.g., information 120 of FIG. 1), which is determined by using a speaker respectively corresponding to the first vectors, the information indicating a speaker of at least one time section of the audio data. The instructions may, when executed by the at least one processor individually or collectively, cause the electronic device to, based on a total number of the first vectors and the second vectors lower than equal to a preset number, store the first vectors in the memory. The instructions, when executed by the at least one processor individually or collectively, may cause the electronic device to, based on a total number of the first vectors and the second vectors greater than the preset number, delete at least one vector among the first vectors and the second vectors from the memory to adjust the total number to be lower than or equal to the preset number. According to an embodiment, the electronic device may efficiently manage the number of the vectors, and/or the size of all of the vectors, which is the information used for the speaker diarization. According to an embodiment, the electronic device may manage or reduce the amount of calculation for clustering of the vectors by maintaining the vectors used for the speaker diarization to be lower than or equal to the preset number.

For example, the instructions, when executed by the at least one processor individually or collectively, may cause the electronic device to determine whether to adjust the preset number by using a duration required for grouping the preset number of vectors.

For example, the instructions, when executed by the at least one processor individually or collectively, may cause the electronic device to, in response to the duration longer than a preset duration, decrease the preset number.

For example, the instructions, when executed by the at least one processor individually or collectively, may cause the electronic device to, based on the total number of the first vectors and the second vectors greater than the preset number, determine whether to store each of the first vectors and the second vectors by using distribution of the first vectors and the second vectors within a vector space.

For example, the instructions, when executed by the at least one processor individually or collectively, may cause the electronic device to, in a state that a plurality of speakers with respect to the plurality of frames are determined, determine whether to store each of the first vectors and the second vectors by using similarities between the first vectors and the second vectors which are determined by using the groups within the vector space respectively corresponding to the plurality of speakers.

For example, the instructions, when executed by the at least one processor individually or collectively, may cause the electronic device to, in a state that a plurality of speakers with respect to the plurality of frames are determined, determine whether to store each of the first vectors, and the second vectors, by using distances between centroid vectors of the groups within the vector space respectively corresponding to the plurality of speakers and the first vectors and the second vectors.

For example, the instructions, when executed by the at least one processor individually or collectively, may cause the electronic device to, in response to detecting a voice section indicating that voice is recorded from the audio data, obtain the plurality of frames by dividing the voice section.

For example, lengths of the plurality of frames may be identical to each other. The plurality of frames may be at least partially overlapped to each other in a time domain.

For example, the electronic device may include a display (e.g., the display 220 of FIG. 2). The instructions, when executed by the at least one processor individually or collectively, may cause the electronic device to, in response to an input indicating to cease obtaining of the audio data, display on the display a screen associated with the information.

For example, the instructions, when executed by the at least one processor individually or collectively, may cause the electronic device to, while obtaining the audio data, compare the preset number to a total number of the first vectors and the second vectors to maintain the number of vectors, which are stored in the memory and associated with the audio data, as the preset number.

As described above, in an embodiment, a method of an electronic device including a microphone may be provided. The method may include, while obtaining audio data by using the microphone, obtaining a plurality of frames by dividing the audio data. The method may include obtaining (e.g., the operation 1010 of FIG. 10) first vectors respectively corresponding to the plurality of frames. The method may include determining (e.g., the operation 1020 of FIG. 10) a speaker corresponding to each of the first vectors by using groups in which the first vectors are respectively included, which are obtained by grouping the first vectors, and second vectors stored in memory of the electronic device. The grouping of the first vectors, and the second vectors may be performed by at least one processor of the electronic device. The method may include storing (e.g., the operation 1030 of FIG. 10) within the memory information, which is determined by using a speaker respectively corresponding to the first vectors, indicating a speaker of at least one time section of the audio data. The method may include, based on a total number of the first vectors and the second vectors lower than a preset number, storing (e.g., the operation 1060 of FIG. 10) the first vectors in the memory. The method may include, based on a total number of the first vectors and the second vectors greater than the preset number, deleting (e.g., the operation 1050 of FIG. 10) at least one vector among the first vectors and the second vectors from the memory to adjust the total number to be lower than or equal to the preset number.

For example, the method may include determining whether to adjust the preset number by using a duration required to grouping the preset number of vectors.

For example, the determining whether to adjust the preset number may include, in response to the duration longer than a preset duration, decreasing the preset number.

For example, the storing the preset number of the vectors may include, based on the total number of the first vectors and the second vectors greater than the preset number, determining whether to store each of the first vectors and the second vectors by using distribution of the first vectors and the second vectors within a vector space.

For example, the storing the preset number of the vectors may include, in a state that a plurality of speakers with respect to the plurality of frames are determined, determining whether to store each of the first vectors and the second vectors by using similarities between the first vectors and the second vectors which are determined by using the groups within the vector space respectively corresponding to the plurality of speakers.

For example, the storing the preset number of the vectors may include, in a state that a plurality of speakers with respect to the plurality of frames are determined, determining whether to store each of the first vectors, and the second vectors, by using distances between centroid vectors of the groups within the vector space respectively corresponding to the plurality of speakers and the first vectors and the second vectors.

For example, the method may comprise determining a first set of first vectors of a first group, of the groups within the vector space. The method may comprise determining a second set of first vectors of the first group. The first set of the first vectors may have more similarities to a centroid vector of the first group than the second set of first vectors of the first group.

For example, the deleting the at least one vector among the first vectors from the memory to adjust the total number to be lower than or equal to the preset number comprises removing the second set of first vectors of the first group from the memory.

For example, the method may include, in response to detecting a voice section indicating that voice is recorded from the audio data, obtaining the plurality of frames by dividing the voice section.

For example, lengths of the plurality of frames may be identical to each other. The plurality of frames may be at least partially overlapped to each other in a time domain.

For example, the method may include, in response to an input indicating to cease obtainment of the audio data, displaying, on a display of the electronic device, a screen associated with the information.

For example, the method may include, while obtaining the audio data, comparing the preset number to a total number of the first vectors and the second vectors to maintain the number of vectors, which are associated with the audio data and stored in the memory, as the preset number.

As described above, in an embodiment, a non-transitory computer readable storage medium storing instructions may be provided. The instructions, when executed by an electronic device including a microphone, may cause the electronic device to, while obtaining audio data by using the microphone, obtain a plurality of frames by dividing the audio data. The instructions, when executed by the electronic device, may cause the electronic device to obtain first vectors respectively corresponding to the plurality of frames. The instructions, when executed by the electronic device, may cause the electronic device to determine a speaker corresponding to each of the first vectors by using groups in which the first vectors are respectively included, which are obtained by grouping the first vectors, and second vectors stored in the memory. The grouping of the first vectors, and the second vectors may be performed by the at least one processor of the electronic device. The instructions, when executed by the electronic device, may cause the electronic device to store, within the memory, information which is determined by using a speaker respectively corresponding to the first vectors, the information indicating a speaker of at least one time section of the audio data. The instructions, when executed by the electronic device, may cause the electronic device to, based on a total number of the first vectors and the second vectors greater than a preset number, delete at least one vector among the first vectors and the second vectors from the memory to adjust the total number to be lower than or equal to the preset number.

As described above, an electronic device according to an embodiment may include a microphone, at least one processor including processing circuitry, and memory including one or more storage media storing instructions. The instructions that, when executed by the at least one processor individually or collectively, may cause the electronic device to obtain first vectors respectively corresponding to a plurality of frames that is included in a first time section of audio data obtained by controlling the microphone. The instructions that, when executed by the at least one processor individually or collectively, may cause the electronic device to determine a speaker of each of the plurality of frames by performing clustering of the first vectors and second vectors obtained in a second time section of the audio data before the first time section. The instructions that, when executed by the at least one processor individually or collectively, may cause the electronic device to determine, among the first vectors and the second vectors, at least one vector to be stored in memory to identify at least one speaker associated with a third time section of the audio data after the first time section.

For example, the instructions that, when executed by the at least one processor individually or collectively, may cause the electronic device to, while obtaining the audio data, compare the preset number to the number of the first vectors and the second vectors to maintain the number of vectors, which are stored in the memory and associated with the audio data, as the preset number.

For example, the instructions that, when executed by the at least one processor individually or collectively, may cause the electronic device to, in response to detecting the first time section indicating that voice is recorded from the audio data, obtain the plurality of frames by dividing the first time section.

As described above, in an embodiment, a non-transitory computer readable storage medium storing instructions may be provided. The instructions, when executed by an electronic device including a microphone, may cause the electronic device to obtain first vectors respectively corresponding to a plurality of frames that is included in a first time section of audio data obtained by controlling the microphone. The instructions, when executed by the at least one processor individually or collectively, may cause the electronic device to determine a speaker of each of the plurality of frames by performing clustering of the first vectors and second vectors obtained in a second time section of the audio data before the first time section. The instructions, when executed by the at least one processor individually or collectively, may cause the electronic device to determine, among the first vectors and the second vectors, at least one vector to be stored in memory to identify at least one speaker associated with a third time section of the audio data after the first time section.

For example, the instructions, when executed by the electronic device, may cause the electronic device to, while obtaining the audio data, compare the preset number to the number of the first vectors and the second vectors to maintain the number of vectors, which are associated with the audio data and are stored in the memory, as the preset number.

For example, the instructions, when executed by the electronic device, may cause the electronic device to, in response to detecting the first time section indicating that voice is recorded from the audio data, obtain the plurality of frames by dividing the first time section.

As described above, one or more non-transitory computer-readable storage media storing one or more computer programs may be provided. The one or more programs may comprise computer-executable instructions that, when executed by one or more processors of an electronic device, individually or collectively, cause the electronic device to perform, while obtaining audio data by using a microphone of the electronic device, obtaining a plurality of frames by dividing the audio data, obtaining first vectors respectively corresponding to the plurality of frames. The one or more programs may comprise computer-executable instructions that, when executed by one or more processors of an electronic device, individually or collectively, cause the electronic device to perform determining a speaker corresponding to each of the first vectors by using groups in which the first vectors are respectively included, which are obtained by grouping the first vectors, and second vectors stored in memory of the electronic device, wherein the grouping of the first vectors, and the second vectors is performed by at least one processor of the electronic device. The one or more programs may comprise computer-executable instructions that, when executed by one or more processors of an electronic device, individually or collectively, cause the electronic device to perform storing, within the memory, information that is determined by using a speaker respectively corresponding to the first vectors, the information indicating a speaker of at least one time section of the audio data. The one or more programs may comprise computer-executable instructions that, when executed by one or more processors of an electronic device, individually or collectively, cause the electronic device to perform, based on a total number of the first vectors and the second vectors greater than a preset number, deleting at least one vector among the first vectors and the second vectors from the memory to adjust the total number to be lower than or equal to the preset number.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and digital versatile disc (DVD), magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

While the disclosure has been shown and described with reference to various embodiments thereof, it will be understood by those skilled in the art that various changes in form and details may be made therein without departing from scope of the disclosure as defined by the appended claims and their equivalents.

## Claims

1. An electronic device, comprising:
a microphone;
at least one processor including processing circuitry; and
memory including one or more storage media storing instructions, wherein the instructions, when executed by the at least one processor individually or collectively, cause the electronic device to:
while obtaining audio data by using the microphone, obtain a plurality of frames by dividing the audio data,
obtain first vectors respectively corresponding to the plurality of frames,
determine a speaker corresponding to each of the first vectors by using groups in which the first vectors are respectively included, which are obtained by grouping the first vectors, and second vectors stored in the memory, wherein the grouping of the first vectors, and the second vectors are performed by the at least one processor of the electronic device,
store, within the memory, information which is determined by using a speaker respectively corresponding to the first vectors, the information indicating a speaker of at least one time section of the audio data, and
based on a total number of the first vectors and the second vectors greater than a preset number, delete at least one vector among the first vectors and the second vectors from the memory to adjust the total number to be lower than or equal to the preset number.

2. The electronic device of claim 1, wherein the instructions that, when executed by the at least one processor individually or collectively, further cause the electronic device to:
determine whether to adjust the preset number by using a duration required for grouping the preset number of vectors.

3. The electronic device of claim 2, wherein the instructions that, when executed by the at least one processor individually or collectively, further cause the electronic device to:
in response to the duration longer than a preset duration, decrease the preset number.

4. The electronic device of claim 1, wherein the instructions that, when executed by the at least one processor individually or collectively, further cause the electronic device to:
based on the total number of the first vectors and the second vectors greater than the preset number, determine whether to store each of the first vectors and the second vectors by using distribution of the first vectors and the second vectors within a vector space.

5. The electronic device of claim 4, wherein the instructions that, when executed by the at least one processor individually or collectively, further cause the electronic device to:
in a state that a plurality of speakers with respect to the plurality of frames are determined, determine whether to store each of the first vectors and the second vectors by using similarities between the first vectors and the second vectors which are determined by using the groups within the vector space respectively corresponding to the plurality of speakers.

6. The electronic device of claim 4, wherein the instructions that, when executed by the at least one processor individually or collectively, further cause the electronic device to:
in a state that a plurality of speakers with respect to the plurality of frames are determined, determine whether to store each of the first vectors, and the second vectors, by using distances between centroid vectors of the groups within the vector space respectively corresponding to the plurality of speakers and the first vectors and the second vectors.

7. The electronic device of claim 1, wherein the instructions that, when executed by the at least one processor individually or collectively, further cause the electronic device to:
in response to detecting a voice section indicating that voice is recorded from the audio data, obtain the plurality of frames by dividing the voice section.

8. The electronic device of claim 7,
wherein lengths of the plurality of frames are identical to each other, and
wherein the frames are at least partially overlapped to each other in a time domain.

9. The electronic device of claim 1, further comprising:
a display,
wherein the instructions that, when executed by the at least one processor individually or collectively, further cause the electronic device to:
in response to an input indicating to cease obtaining of the audio data, display on the display a screen associated with the information.

10. The electronic device of claim 1, wherein the instructions that, when executed by the at least one processor individually or collectively, further cause the electronic device to:
while obtaining the audio data, compare the preset number to a total number of the first vectors and the second vectors to maintain a number of vectors, which are stored in the memory and associated with the audio data, as the preset number.

11. A method of an electronic device including a microphone, the method comprising:
while obtaining audio data by using the microphone, obtaining a plurality of frames by dividing the audio data;
obtaining first vectors respectively corresponding to the plurality of frames;
determining a speaker corresponding to each of the first vectors by using groups in which the first vectors are respectively included, which are obtained by grouping the first vectors, and second vectors stored in memory of the electronic device, wherein the grouping of the first vectors, and the second vectors is performed by at least one processor of the electronic device;
storing, within the memory, information that is determined by using a speaker respectively corresponding to the first vectors, the information indicating a speaker of at least one time section of the audio data; and
based on a total number of the first vectors and the second vectors greater than a preset number, deleting at least one vector among the first vectors and the second vectors from the memory to adjust the total number to be lower than or equal to the preset number.

12. The method of claim 11, further comprising:
determining whether to adjust the preset number by using a duration required to grouping the preset number of vectors.

13. The method of claim 12, wherein the determining whether to adjust the preset number comprising:
in response to the duration longer than a preset duration, decreasing the preset number.

14. The method of claim 11, wherein the storing the preset number of the vectors comprising:
based on the total number of the first vectors and the second vectors greater than the preset number, determining whether to store each of the first vectors and the second vectors by using distribution of the first vectors and the second vectors within a vector space.

15. The method of claim 14, wherein the storing the preset number of the vectors comprising:
in a state that a plurality of speakers with respect to the plurality of frames are determined, determining whether to store each of the first vectors and the second vectors by using similarities between the first vectors and the second vectors which are determined by using the groups within the vector space respectively corresponding to the plurality of speakers.
